# EUROPEAN PATENT APPLICATION

(11) **EP 4 657 593 A1**
(43) Date of publication of application: **03.12.2025**
(21) Application number: 23943409.5
(22) Date of filing: 12.12.2023
(51) Int. Cl.: H01M 10/058

(54) **BATTERY CELL AND MANUFACTURING METHOD THEREFOR, AND BATTERY AND ELECTRIC APPARATUS**

(30) Priority: 28.06.2023 CN 202310775706
(71) Applicant: Contemporary Amperex Technology Co., Limited, Ningde, Fujian 352100 (CN)
(72) Inventor: WU, Kai, Ningde, Fujian 352100 (CN); SHANG, Yibo, Ningde, Fujian 352100 (CN); GUO, Suogang, Ningde, Fujian 352100 (CN); QIN, Yiming, Ningde, Fujian 352100 (CN); FU, Chenghua, Ningde, Fujian 352100 (CN); HE, Jianfu, Ningde, Fujian 352100 (CN); YE, Yonghuang, Ningde, Fujian 352100 (CN)
(74) Representative: Kraus & Lederer PartGmbB
(86) International application number: PCT/CN2023/138118
(87) International publication number: WO 2025/000935

(57) **Abstract**

Provided in the present application are a battery cell and a manufacturing method therefor, and a battery and an electric apparatus. The battery cell comprises a positive electrode sheet and an electrolyte. The electrolyte solution contains a non-aqueous solvent and electrolyte salt, wherein the electrolyte salt contains lithium salt and metal Me salt, the ionic radius of Me positive ions is greater than the ionic radius of lithium ions, and the weight content of the lithium ions in the electrolyte is denoted as w₁, and the weight content of the Me positive ions in the electrolyte is denoted as w₂, both of which are based on the total weight of the electrolyte. In a charge and discharge test of a battery cell, the total discharge capacity of the battery cell is denoted as Q₁, and the discharge capacity of the battery cell with a discharge voltage of 3.6 V is denoted as Q₂, and the unit of the discharge capacities is mAh. When the remaining capacity of the battery cell is greater than 90%, 0.8 ≤ (Q₂/Q₁)/[w₂/(w₁ + w₂)] ≤ 8.5 is satisfied.

## Description

### CROSS-REFERENCE TO RELATED APPLICATION

The present application claims priority to Chinese Patent Application No. 202310775706.4 filed on June 28, 2023 and entitled "BATTERY CELL AND MANUFACTURING METHOD THEREFOR, AND BATTERY AND ELECTRIC APPARATUS", the content of which is incorporated herein by reference in its entirety.

### TECHNICAL FIELD

The present application relates to a battery cell and a preparation method therefor, a battery, and an electric device.

### BACKGROUND

In recent years, batteries have been widely used in energy storage power systems such as hydropower, thermal power, wind power, and solar power stations, as well as in various fields such as electric tools, electric bicycles, electric motorcycles, electric vehicles, military equipment, and aerospace. The positive electrode active material serves as an important constituent of the battery, and the performance thereof may affect the performance of the battery. Currently, a single positive electrode active material that can simultaneously satisfy the requirements of low cost, high specific capacity, and few side reactions has not been developed. Therefore, a positive electrode plate often includes two or more different types of positive electrode active materials at the same time. However, when different types of positive electrode active materials are used in combination, the internal resistance of the battery increases rapidly during the cycling process, such that the power performance of the battery deteriorates significantly and the capacity retention rate declines rapidly in the later use stage of the battery, thereby affecting the use of the battery. The above statements are only used to provide background information related to the present application and do not necessarily constitute the prior art.

### SUMMARY

The present application provides a battery cell, a preparation method therefor, a battery and an electric device, which can improve the cycle performance of the battery.

A first aspect of the present application provides a battery cell, which includes a positive electrode plate and an electrolytic solution.

The positive electrode plate includes a positive electrode current collector and a positive electrode film layer disposed on at least one surface of the positive electrode current collector, the positive electrode film layer includes a positive electrode active material, the positive electrode active material includes a first positive electrode active material and a second positive electrode active material, the first positive electrode active material and the second positive electrode active material enable deintercalation and intercalation of lithium ions, crystal forms of the first positive electrode active material and the second positive electrode active material are different, the second positive electrode active material is provided with a one-dimensional ion transport channel, and an ionic conductivity of the first positive electrode active material is greater than that of the second positive electrode active material.

The electrolytic solution includes a non-aqueous solvent and an electrolyte salt, the electrolyte salt includes a lithium salt and a metal Me salt, the lithium salt dissociates into lithium ions and first anions in the electrolytic solution, the metal Me salt dissociates into Me cations and second anions in the electrolytic solution, an ionic radius of the Me cations is greater than that of the lithium ions, a weight content of the lithium ions in the electrolytic solution is denoted as w₁, and a weight content of the Me cations in the electrolytic solution is denoted as w₂, both based on a total weight of the electrolytic solution.

In a charge-discharge test of the battery cell, a total discharge capacity of the battery cell is denoted as Q₁, and a discharge capacity of the battery cell at a discharge voltage of 3.6 V or less is denoted as Q₂, both with a unit of mAh.

The battery cell, when in a state where the remaining capacity is greater than 90%, satisfies a condition of 0.8 ≤ (Q₂/Q₁)/[w₂/(w₁ + w₂)] ≤ 8.5.

The charge-discharge test of the battery cell is performed under the following conditions: at a test temperature of 25 °C, the battery cell is fully charged at 0.5 C, left to stand for 5 min, and then fully discharged at 0.33 C.

The inventors have found through research that, by incorporating a metal Me salt with the ionic radius of cations greater than that of lithium ions into the electrolytic solution, the Me cations in the electrolytic solution will be intercalated into the surface layer of the first positive electrode active material during the discharge process of the battery. Since the ionic radius of the Me cations is greater than that of the lithium ions, the Me cations will get stuck in a transfer channel of the first positive electrode active material for deintercalation and intercalation of the lithium ions during the discharge process of the battery, such that the effect of stabilizing the surface layer structure of the first positive electrode active material can be achieved.

The inventors have further found through research that, when the battery cell satisfies a condition of 0.8 ≤ (Q₂/Q₁)/[w₂/(w₁ + w₂)] ≤ 8.5, the battery may have a relatively low internal resistance increase rate and may also have a long cycle life and good power performance.

In any embodiment, 1.1 ≤ (Q₂/Q₁)/[w₂/(w₁ + w₂)] ≤ 6.8, and optionally, 1.7 ≤ (Q₂/Q₁)/[w₂/(w₁ + w₂)] ≤ 3.9. As such, the amount of the Me cations in the electrolytic solution can be better matched with the discharge capacity of the battery at the discharge voltage of 3.6 V or less, thereby further reducing the increase rate of the internal resistance of the battery, and better improving the cycle performance and power performance of the battery.

In any embodiment, 0.29 ≤ Q₂/Q₁ ≤ 0.42, and optionally, 0.31 ≤ Q₂/Q₁ ≤ 0.40.

In any embodiment, 0.05 ≤ w₂/(w₁ + w₂) ≤ 0.35, and optionally, 0.05 ≤ w₂/(w₁ + w₂) ≤ 0.30. When w₂/(w₁ + w₂) is within the above range, the stability of the negative electrode interface can be improved, thereby facilitating the improvement of the high-temperature performance of the battery.

In any embodiment, the Me element includes one or more of an alkali metal element and an alkaline earth metal element.

Optionally, the alkali metal element includes one or more of Na and K.

Optionally, the alkaline earth metal element includes one or more of Ca and Mg.

In any embodiment, the first anions include one or more of PF₆⁻, ClO₄⁻, AsF₆⁻, BF₄⁻, N(CF₃SO₂)₂⁻, CF₃SO₃⁻, N(FSO₂)₂⁻, C(SO₂CF₃)₃⁻, PO₂F₂⁻, a difluoro(oxalato)borate ion, a bis(oxalato)borate ion, a difluorobis(oxalato)phosphate ion, and a tetrafluoro(oxalato)phosphate ion.

In any embodiment, the second anions include one or more of PF₆⁻, ClO₄⁻, AsF₆⁻, BF₄⁻, N(CF₃SO₂)₂⁻, CF₃SO₃⁻, N(FSO₂)₂⁻, C(SO₂CF₃)₃⁻, PO₂F₂⁻, a difluoro(oxalato)borate ion, a bis(oxalato)borate ion, a difluorobis(oxalato)phosphate ion, and a tetrafluoro(oxalato)phosphate ion.

In any embodiment, the first anions are the same as the second anions. As such, the increase rate of the internal resistance of the battery can be further reduced, and the cycle performance and power performance of the battery can be better improved.

In any embodiment, a weight proportion W₁ of the first positive electrode active material is 10%-90%, and optionally 70%-90%, based on a total weight of the positive electrode active material.

In any embodiment, a weight proportion W₂ of the second positive electrode active material is 10%-90%, and optionally 10%-30%, based on the total weight of the positive electrode active material.

As such, the high energy density and long cycle life can be better balanced for the battery.

In any embodiment, a specific surface area of the first positive electrode active material is 0.5 m²/g to 1 m²/g, and optionally 0.6 m²/g to 0.9 m²/g.

In any embodiment, a specific surface area of the second positive electrode active material is 10 m²/g to 20 m²/g, and optionally 12 m²/g to 16 m²/g. When the specific surface area of the second positive electrode active material is within the above range, it is conducive to providing the battery with a lower internal resistance increase rate and a longer cycle life.

In any embodiment, the first positive electrode active material includes a lithium-containing layered oxide.

In any embodiment, the first positive electrode active material includes a compound represented by formula (I).

LiₐA¹_{b}Ni_{c}Co_{d}B¹ₑC¹_{f}O_{g}D¹ₕ (I)

A¹ includes one or more elements selected from Group IA, Group IIA, Group VIII, Group VIB, and Group IIB, and optionally one or more elements selected from Na, K, Mg, Rb, Zn, and Zr; B¹ includes selected from Mn and/or Al; C¹ includes one or more elements selected from Group IA, Group IIA, Group IIIA, Group IVA, Group VA, Group VIA, Group IB, Group IIB, Group IIIB, Group IVB, Group VB, Group VIB, and Group VIII, optionally one or more elements selected from Al, Mg, Ca, Na, Ti, W, Zr, Sr, Cr, Fe, Zn, Cu, Ba, Mo, V, Ce, Nb, Sb, Ta, Ge, Nb, Sc, Ba, B, S, and Y, and more optionally one or more elements selected from Mg, Ti, W, Zr, Cr, Fe, Zn, Cu, V, Nb, Sr, Sb, and Y; D¹ includes one or more elements selected from Group VIA and Group VIIA, optionally one or more elements selected from N, S, F, Cl, and Br, and more optionally S and/or F; a is selected from a range of 0.75 to 1.2, and optionally from a range of 0.9 to 1.1; b is selected from a range of 0 to 0.2, and optionally from a range of 0 to 0.1; c is selected from a range of 0.001 to 0.990, and optionally from a range of 0.500 to 0.990; d is selected from a range of 0 to 0.990, and optionally from a range of 0 to 0.100; e is selected from a range of 0.001 to 0.990, and optionally from a range of 0.005 to 0.450; f is selected from a range of 0 to 0.1, and optionally from a range of 0.001 to 0.05; g is selected from a range of 1.0 to 2.0, and optionally from a range of 1.9 to 2.0; h is selected from a range of 0 to 1.0, and optionally from a range of 0.01 to 0.1.

In any embodiment, c + d + e + f = 1.

In any embodiment, g + h = 2.

In any embodiment, the first positive electrode active material includes a first core and a first shell coating the first core. The first core includes the compound represented by formula (I); the first shell includes one or more coating layers, and each of the coating layers has ionic conductivity and/or electronic conductivity.

In any embodiment, the one or more coating layers each independently include one or more selected from a phosphate, a pyrophosphate, carbon, doped carbon, an oxide, and a fast-ionic conductor, and more optionally one or more selected from a phosphate, a pyrophosphate, and an oxide.

In any embodiment, a coating amount of the first shell is 0.005 wt% to 1 wt%, and optionally 0.01 wt% to 0.5 wt%, based on a weight of the first core.

In any embodiment, a thickness of the first shell is 2 nm to 200 nm, and optionally 5 nm to 50 nm.

In any embodiment, the second positive electrode active material includes a lithium-containing phosphate.

In any embodiment, the second positive electrode active material includes a compound represented by formula (II).

Liₘ₁A²ₓ₁Mn_{1-y1}B²_{y1}P_{1-z1}C²_{z1}O₄₋ₙ₁D²ₙ₁ (II)

A² includes one or more elements selected from Group IA, Group IIA, Group IIIA, Group IIB, Group VB, and Group VIB, optionally one or more elements selected from Rb, Cs, Be, Ca, Sr, Ba, Ga, In, Cd, V, Ta, Cr, Zn, Al, Na, K, Mg, Nb, Mo, and W, and more optionally one or more elements selected from Zn, Al, Na, K, Mg, Nb, Mo, and W; B² includes one or more elements selected from Group IA, Group IIA, Group IIIA, Group IVA, Group VA, Group IIB, Group IVB, Group VB, Group VIB, and Group VIII, optionally one or more elements selected from the group consisting of Rb, Cs, Be, Ca, Sr, Ba, In, Pb, Bi, Cd, Hf, Ta, Cr, Ru, Rh, Pd, Os, Ir, Pt, Zn, Al, Na, K, Mg, Mo, W, Ti, V, Zr, Fe, Ni, Co, Ga, Sn, Sb, Nb, and Ge, and more optionally one or more elements selected from Zn, Al, Na, K, Mg, Mo, W, Ti, V, Zr, Fe, Ni, Co, Ga, Sn, Sb, Nb, and Ge; C² includes one or more elements selected from Group IIIA, Group IVA, Group VA, and Group VIA, and optionally one or more elements selected from B, S, Si, and N; D² includes one or more elements selected from Group VIA and Group VIIA, and optionally one or more elements selected from S, F, Cl, and Br; m1 is selected from a range of 0.85 to 1.15, optionally from a range of 0.9 to 1.1, and more optionally from a range of 0.97 to 1.01; x1 is selected from a range of 0 to 0.1, optionally from a range of 0.001 to 0.1, and more optionally from a range of 0.001 to 0.005; y1 is selected from a range of 0.001 to 0.999, optionally from a range of 0.001 to 0.5, and more optionally from a range of 0.2 to 0.5; z1 is selected from a range of 0 to 0.5, optionally from a range of 0.001 to 0.1, and more optionally from a range of 0.001 to 0.005; n1 is selected from a range of 0 to 0.5, optionally from a range of 0 to 0.1, and more optionally from a range of 0.001 to 0.005.

By doping specific elements in specific amounts at the Mn site and optionally at the Li site, P site, and/or O site of LiMnPO₄, an improvement in the rate capability can be achieved while reducing the dissolution of Mn and the doping elements at the Mn site, such that an improvement in the cycle performance and/or high-temperature stability is achieved, and the specific capacity and compaction density of the material are also increased.

In any embodiment, A² includes any one element selected from Zn, Al, Na, K, Mg, Nb, Mo, and W, and optionally any one element selected from Mg and Nb.

In any embodiment, B² includes one or more elements selected from Ti, V, Zr, Fe, Ni, Mg, Co, Ga, Sn, Sb, Nb, and Ge, optionally at least two elements selected from Ti, V, Zr, Fe, Ni, Mg, Co, Ga, Sn, Sb, Nb, and Ge, more optionally at least two elements selected from Fe, Ti, V, Ni, Co, and Mg, further optionally at least two elements selected from Fe, Ti, V, Co, and Mg, and further more optionally Fe and one or more elements selected from Ti, V, Co, and Mg.

In any embodiment, C² includes any one element selected from B, S, Si, and N, and is optionally S.

In any embodiment, D² includes any one element selected from S, F, Cl, and Br, and is optionally F.

In any embodiment, x1 is 0, z1 is 0, and n1 is 0; or, x1 is 0, z1 is selected from a range of 0.001 to 0.5, and n1 is selected from a range of 0.001 to 0.1; or, x1 is selected from a range of 0.001 to 0.1, z1 is 0, and n1 is selected from a range of 0.001 to 0.1; or, x1 is selected from a range of 0.001 to 0.1, z1 is selected from a range of 0.001 to 0.5, and n1 is 0; or, x1 is 0, z1 is 0, and n1 is selected from a range of 0.001 to 0.1; or, x1 is 0, z1 is selected from a range of 0.001 to 0.5, and n1 is 0; or, x1 is selected from a range of 0.001 to 0.1, z1 is selected from a range of 0.001 to 0.5, and n1 is selected from a range of 0.001 to 0.1.

By doping specific elements in specific amounts at the Mn site and optionally at the Li site, P site, and/or O site of LiMnPO₄, particularly by doping specific elements in specific amounts at the Mn site and P site of LiMnPO₄ or at the Li site, Mn site, P site, and O site of LiMnPO₄, the rate capability can be improved, and the dissolution of Mn and the doping elements at the Mn site can be reduced, such that the cycle performance and/or high-temperature stability are improved, and the specific capacity and compaction density of the second positive electrode active material are increased.

In any embodiment, y1:z1 is selected from a range of 0.002 to 999, optionally from a range of 0.025 to 999 or from a range of 0.002 to 500, and more optionally from a range of 0.2 to 600. As such, the defects of the second positive electrode active material can be reduced, and the integrity of the framework structure of the second positive electrode active material can be enhanced, such that the structural stability of the second positive electrode active material is effectively improved, thereby improving the cycling stability of the battery.

In any embodiment, z1:n1 is selected from a range of 0.002 to 500, optionally from a range of 0.2 to 100, and more optionally from a range of 0.2 to 50. As such, the defects of the second positive electrode active material can be further reduced, and the integrity of the framework structure of the second positive electrode active material can be further enhanced, such that the structural stability of the second positive electrode active material is effectively improved, thereby improving the cycling stability of the battery.

In any embodiment, A² includes one or more elements selected from Zn, Al, Na, K, Mg, Nb, Mo, and W; B² includes one or more elements selected from Ti, V, Zr, Fe, Ni, Mg, Co, Ga, Sn, Sb, Nb, and Ge; C² includes one or more elements selected from B, S, Si, and N; D² includes one or more elements selected from S, F, Cl, and Br; m1 is selected from a range of 0.9 to 1.1, x1 is selected from a range of 0.001 to 0.1, y1 is selected from a range of 0.001 to 0.5, z1 is selected from a range of 0.001 to 0.1, and n1 is selected from a range of 0.001 to 0.1.

By simultaneously doping specific elements in specific amounts at the Li site, Mn site, P site, and O site of LiMnPO₄, an improvement in the rate capability can be achieved, while reducing the dissolution of Mn and the doping elements at the Mn site, such that an improvement in the cycle performance and/or high-temperature stability is achieved, and the specific capacity and compaction density of the second positive electrode active material may also be increased.

In any embodiment, B² includes one or more elements selected from Zn, Al, Na, K, Mg, Mo, W, Ti, V, Zr, Fe, Ni, Co, Ga, Sn, Sb, Nb, and Ge, and optionally one or more elements selected from Zn, Fe, Ti, V, Ni, Co, and Mg; C² includes one or more elements selected from B, Si, N, and S; m1 is selected from a range of 0.9 to 1.1, x1 is 0, y1 is selected from a range of 0.001 to 0.5, z1 is selected from a range of 0.001 to 0.1, and n1 is 0.

By simultaneously doping specific elements in specific amounts at the Mn site and P site of LiMnPO₄, the rate capability can be improved, and the dissolution of Mn and the doping elements at the Mn site can be reduced, such that the cycle performance and/or high-temperature stability are improved, and the specific capacity and compaction density of the second positive electrode active material are increased.

In any embodiment, (1-y1):y1 is within a range of 0.1 to 999, optionally within a range of 0.1 to 10 or within a range of 0.67 to 999, more optionally within a range of 1 to 10, further optionally within a range of 1 to 4, and further more optionally within a range of 1.5 to 3.

In any embodiment, a1:x1 is within a range of 1 to 1200, optionally within a range of 9 to 1100, and more optionally within a range of 190 to 998.

In any embodiment, z1:(1-z1) is 1:9 to 1:999, and optionally 1:499 to 1:249. When the above conditions are satisfied, the energy density and cycle performance of the second positive electrode active material can be further improved.

In any embodiment, the second positive electrode active material includes a compound represented by formula (III).

Liₘ₂A³ₓ₂Fe_{1-y2}B³_{y2}P_{1-z2}C³_{z2}O₄₋ₙ₂D³ₙ₂ (III)

A³ includes one or more elements selected from Group IA, Group IIA, Group IIIA, Group IIB, Group VB, and Group VIB, optionally one or more elements selected from Rb, Cs, Be, Ca, Sr, Ba, Ga, In, Cd, V, Ta, Cr, Zn, Al, Na, K, Mg, Nb, Mo, and W, and more optionally one or more elements selected from Zn, Al, Na, K, Mg, Nb, Mo, and W; B³ includes one or more elements selected from Group IA, Group IIA, Group IIIA, Group IVA, Group VA, Group IIB, Group IVB, Group VB, Group VIB, and Group VIII, optionally one or more elements selected from the group consisting of Rb, Cs, Be, Ca, Sr, Ba, In, Pb, Bi, Cd, Hf, Ta, Cr, Ru, Rh, Pd, Os, Ir, Pt, Zn, Al, Na, K, Mg, Mo, W, Ti, V, Zr, Ni, Co, Ga, Sn, Sb, Nb, and Ge, and more optionally one or more elements selected from Zn, Al, Na, K, Mg, Mo, W, Ti, V, Zr, Ni, Co, Ga, Sn, Sb, Nb, and Ge; C³ includes one or more elements selected from Group IIIA, Group IVA, Group VA, and Group VIA, and optionally one or more elements selected from B, S, Si, and N; D³ includes one or more elements selected from Group VIA and Group VIIA, and optionally one or more elements selected from S, F, Cl, and Br; m2 is selected from a range of 0.85 to 1.15, optionally from a range of 0.9 to 1.1, and more optionally from a range of 0.97 to 1.01; x2 is selected from a range of 0 to 0.1, and optionally from a range of 0.001 to 0.005; y2 is selected from a range of 0 to 0.5, optionally from a range of 0.001 to 0.2, and more optionally from a range of 0.005 to 0.1; z2 is selected from a range of 0 to 0.5, optionally from a range of 0.001 to 0.1, and more optionally from a range of 0.001 to 0.005; n2 is selected from a range of 0 to 0.5, optionally from a range of 0 to 0.1, and more optionally from a range of 0.001 to 0.005.

In any embodiment, the second positive electrode active material includes a second core and a second shell coating the second core. The second core includes the compound represented by formula (II) or the compound represented by formula (III); the second shell includes one or more coating layers, and each of the coating layers has ionic conductivity and/or electronic conductivity. By disposing the coating layer having ionic conductivity and/or electronic conductivity on the surface of the second core, a second positive electrode active material having a core-shell structure is provided. When the second positive electrode active material is applied to a battery, the high-temperature cycle performance, cycling stability, and high-temperature storage performance of the battery can be improved.

In any embodiment, the one or more coating layers each independently include one or more selected from a pyrophosphate, a phosphate, carbon, doped carbon, an oxide, a boride, and a polymer.

In any embodiment, the second shell includes one coating layer; optionally, the coating layer includes one or more selected from a pyrophosphate, a phosphate, carbon, doped carbon, an oxide, a boride, and a polymer. By using the above materials, a coating layer having ionic conductivity and/or electronic conductivity can be obtained, such that the high-temperature cycle performance, cycling stability, and high-temperature storage performance of the battery are improved.

In any embodiment, the second shell includes a first coating layer coating the second core and a second coating layer coating the first coating layer; optionally, the first coating layer and the second coating layer each independently include one or more selected from a pyrophosphate, a phosphate, carbon, doped carbon, an oxide, a boride, and a polymer; more optionally, the first coating layer includes one or more selected from a pyrophosphate, a phosphate, an oxide, and a boride, and the second coating layer includes one or more selected from carbon and doped carbon. By using the first coating layer made of a specific material and the second coating layer made of a specific material, the rate capability can be further improved, and the dissolution of Mn and the doping elements at the Mn site can be further reduced, such that the cycle performance and/or high-temperature stability of the battery can be improved.

In any embodiment, the second shell includes a first coating layer coating the second core, a second coating layer coating the first coating layer, and a third coating layer coating the second coating layer; optionally, the first coating layer, the second coating layer, and the third coating layer each independently include one or more selected from a pyrophosphate, a phosphate, carbon, doped carbon, an oxide, a boride, and a polymer; more optionally, the first coating layer includes a pyrophosphate, the second coating layer includes one or more selected from a phosphate, an oxide, and a boride, and the third coating layer includes one or more selected from carbon and doped carbon. By using the first coating layer made of a specific material, the second coating layer made of a specific material, and the third coating layer made of a specific material, the rate capability is further improved, and the dissolution of Mn and the doping elements at the Mn site is further reduced, such that the cycle performance and/or high-temperature stability of the battery are further improved, and the specific capacity and compaction density of the second positive electrode active material are further increased.

In any embodiment, the pyrophosphate is Mᵢ(P₂O₇)ⱼ; and/or,
the phosphate is Xₚ(PO₄)_{q}; and/or,
a doping element in the doped carbon includes one or more selected from Group IIIA, Group VA, Group VIA, and Group VIIA; and/or,
the oxide is M'ₖOₗ; and/or,
the boride is ZᵥB_{w}; and/or,
the polymer includes one or more selected from a polysaccharide and a derivative thereof, and a polysiloxane;
M, X, and Z each independently include one or more elements selected from Group IA, Group IIA, Group IIIA, Group IB, Group IIB, Group IVB, Group VB, Group VIIB, and Group VIII;
i is selected from a range of 1 to 4;
j is selected from a range of 1 to 6;
p is selected from a range of 1 to 2;
q is selected from a range of 1 to 4;
M' includes one or more elements selected from alkali metals, alkaline earth metals, transition metals, Group IIIA elements, Group IVA elements, lanthanide elements, and Sb;
k is greater than 0 and less than or equal to 2;
1 is greater than 0 and less than or equal to 5;
v is selected from a range of 1 to 7;
w is selected from a range of 1 to 2.

By using the above materials as the coating layers, the dissolution of Mn and the doping elements at the Mn site can be further reduced, such that the specific capacity and compaction density of the second positive electrode active material are further increased, and the rate capability, high-temperature cycle performance and high-temperature storage performance of the battery are further improved.

In any embodiment, M, X, and Z each independently include one or more elements selected from Li, Fe, Ni, Mg, Co, Cu, Zn, Ti, Ag, Zr, Nb, Mn, and Al; and/or,
the doping element in the doped carbon includes one or more selected from nitrogen, phosphorus, sulfur, boron, and fluorine; and/or,
M' includes one or more elements selected from Li, Be, B, Na, Mg, Al, Si, P, K, Ca, Sc, Ti, V, Cr, Mn, Fe, Co, Ni, Cu, Zn, Ga, Ge, As, Se, Sr, Y, Zr, Nb, Mo, Tc, Ru, Rh, Pd, Ag, Cd, In, Sn, Sb, Te, W, La, and Ce, optionally one or more elements selected from Mg, Al, Si, Zn, Zr, and Sn; and/or,
the polysiloxane is selected from one or more of a polysiloxane of a linear structure and a polysiloxane of a cyclic structure; and/or,
the polysaccharide is selected from one or more of a plant polysaccharide and a marine polysaccharide.

By using the above specific materials as the coating layers, the dissolution of Mn and the doping elements at the Mn site can be further reduced, such that the high-temperature cycle performance and high-temperature storage performance of the battery are further improved.

In any embodiment, the second positive electrode active material includes a second core and a second shell coating the second core. The second core includes Liₘ₁Mn_{1-y1}B²_{y1}P_{1-z1}C²_{z1}O₄, where m1 is selected from a range of 0.9 to 1.1, y1 is selected from a range of 0.001 to 0.5, z1 is selected from a range of 0.001 to 0.1, B² includes one or more elements selected from Ti, V, Zr, Fe, Ni, Mg, Co, Ga, Sn, Sb, Nb, and Ge, C² includes one or more elements selected from B, S, Si, and N; the second shell includes a first coating layer coating the second core and a second coating layer coating the first coating layer, and the first coating layer includes pyrophosphate MP₂O₇ and phosphate XPO₄, where M and X each independently include one or more elements selected from Li, Fe, Ni, Mg, Co, Cu, Zn, Ti, Ag, Zr, Nb, and Al; the second coating layer includes carbon. By performing specific element doping and surface coating on the lithium manganese phosphate, the dissolution of Mn during the lithium intercalation process can be effectively reduced, and the migration of lithium ions is promoted, such that the rate capability of the battery is improved, and the cycle performance and high-temperature performance of the battery are enhanced.

In any embodiment, the second positive electrode active material includes a second core and a second shell coating the second core. The second core includes Liₘ₁Mn_{1-y1}B²_{y1}P_{1-z1}C²_{z1}O₄, where m1 is selected from a range of 0.9 to 1.1, y1 is selected from a range of 0.001 to 0.5, z1 is selected from a range of 0.001 to 0.1, B² includes one or more elements selected from Ti, V, Zr, Fe, Ni, Mg, Co, Ga, Sn, Sb, Nb, and Ge, C² includes one or more elements selected from B, S, Si, and N; the second shell includes a first coating layer coating the second core, a second coating layer coating the first coating layer, and a third coating layer coating the second coating layer, and the first coating layer includes pyrophosphate LiᵣQP₂O₇ and/or Qₛ(P₂O₇)ₜ, where 0 ≤ r ≤ 2, 1 ≤ s ≤ 4, 1 ≤ t ≤ 6, and Q in the pyrophosphate LiᵣQP₂O₇ and/or Qₛ(P₂O₇)ₜ each independently includes one or more elements selected from Fe, Ni, Mg, Co, Cu, Zn, Ti, Ag, Zr, Nb, and Al; the second coating layer includes crystalline phosphate XPO₄, where X includes one or more elements selected from Li, Fe, Ni, Mg, Co, Cu, Zn, Ti, Ag, Zr, Nb, and Al; the third coating layer includes carbon. As such, the second positive electrode active material can improve the specific capacity and cycle performance of the battery.

**In** any embodiment, the one or more coating layers in the second shell that are most distal to the second core each independently include one or more selected from a polysiloxane, a polysaccharide, and a polysaccharide derivative. As such, the coating uniformity can be enhanced, and the interface side reactions caused by high voltage can be effectively blocked, thereby enhancing the high-temperature cycle performance and high-temperature storage performance of the second positive electrode active material. Moreover, the coating layers have good ionic conductivity, which is conducive to increasing the specific capacity of the second positive electrode active material and reducing the heat generation of the battery.

**In** any embodiment, the polysiloxane includes a structural unit represented by formula (i).

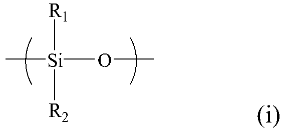

R₁ and R₂ are independently selected from H, -COOH, -OH, -SH, -CN, -SCN, amino, a phosphate group, a carboxylate group, an amide group, an aldehyde group, sulfonyl, a polyether segment, C1-C20 aliphatic hydrocarbyl, C1-C20 haloaliphatic hydrocarbyl, C1-C20 heteroaliphatic hydrocarbyl, C1-C20 haloheteroaliphatic hydrocarbyl, C6-C20 aromatic hydrocarbyl, C6-C20 haloaromatic hydrocarbyl, C2-C20 heteroaromatic hydrocarbyl, and C2-C20 haloheteroaromatic hydrocarbyl; optionally, R₁ and R₂ are independently selected from H, amino, a phosphate group, a polyether segment, C1-C8 alkyl, C1-C8 haloalkyl, C1-C8 heteroalkyl, C1-C8 haloheteroalkyl, C2-C8 alkenyl, and C2-C8 haloalkenyl.

In any embodiment, the polysiloxane further includes a capping group. The capping group includes one or more of the group consisting of the following functional groups: polyether, C1-C8 alkyl, C1-C8 haloalkyl, C1-C8 heteroalkyl, C1-C8 haloheteroalkyl, C2-C8 alkenyl, C2-C8 haloalkenyl, C6-C20 aromatic hydrocarbyl, C1-C8 alkoxy, C2-C8 epoxy, hydroxy, C1-C8 hydroxyalkyl, amino, C1-C8 aminoalkyl, carboxy, and C1-C8 carboxyalkyl.

In any embodiment, the polysiloxane includes one or more selected from polydimethylsiloxane, polydiethylsiloxane, polymethylethylsiloxane, polymethylvinylsiloxane, polyphenylmethylsiloxane, polymethylhydrosiloxane, carboxy-functionalized polysiloxane, epoxy-terminated polysiloxane, methoxy-terminated polydimethylsiloxane, hydroxypropyl-terminated polydimethylsiloxane, polymethylchloropropylsiloxane, hydroxy-terminated polydimethylsiloxane, polymethyltrifluoropropylsiloxane, perfluorooctylmethylpolysiloxane, aminoethylaminopropylpolydimethylsiloxane, terminal polyether polydimethylsiloxane, pendant aminopropylpolysiloxane, aminopropyl-terminated polydimethylsiloxane, pendant phosphate-grafted polydimethylsiloxane, pendant polyether-grafted polydimethylsiloxane, 1,3,5,7-octamethylcyclotetrasiloxane, 1,3,5,7-tetrahydro-1,3,5,7-tetramethylcyclotetrasiloxane, cyclopentasiloxane, 2,4,6,8-tetramethylcyclotetrasiloxane, 2,4,6,8-tetramethyl-2,4,6,8-tetravinylcyclotetrasiloxane, cyclopolymethylvinylsiloxane, hexadecamethylcyclooctasiloxane, tetradecamethylcycloheptasiloxane, and cyclopolydimethylsiloxane.

In any embodiment, number-average molecular weights of the polysiloxane, the polysaccharide, and the polysaccharide derivative are each independently 300,000 or less, optionally 10,000 to 200,000, more optionally 20,000 to 120,000, and further optionally 400 to 80,000.

In any embodiment, a mass percentage content of polar functional groups in the polysiloxane is α, where 0 ≤ α < 50%, and optionally 5% ≤ α ≤ 30%.

In any embodiment, substituents attached to saccharide units in the polysaccharide and the polysaccharide derivative each independently include one or more of the group consisting of the following functional groups: -OH, -COOH and a salt thereof, -R-OH, -SO₃H and a salt thereof, -R-OH, -R-SO₃H and a salt thereof, a sulfate group, and alkoxy, where R represents alkylene, and optionally C1-C5 alkylene; optionally, substituents attached to saccharide units in the polysaccharide and the polysaccharide derivative each independently include one or more of the group consisting of the following functional groups: -OH, -COOH, -COOLi, -COONa, -COOK, -SO₃H, -SO₃Li, -SO₃Na, -SO₃K, -CH₂-SO₃H, -CH₂-SO₃Li, -CH₂-SO₃Na, -CH₂-SO₃K, methoxy, and ethoxy.

In any embodiment, the polysaccharide includes one or more selected from pectin, carboxymethyl starch, hydroxypropyl starch, dextrin, cellulose ether, carboxymethyl chitosan, hydroxyethyl cellulose, carboxymethylcellulose, carboxypropyl methyl cellulose, guar gum, sesbania gum, arabic gum, lithium alginate, sodium alginate, potassium alginate, fucoidan, agar, carrageenan, carrageenin, xanthan gum, and fenugreek gum.

In any embodiment, mass percentage contents of the substituents attached to the saccharide units in the polysaccharide and the polysaccharide derivative are each independently 20% to 85%, and optionally 30% to 78%.

In any embodiment, a lattice mismatch degree between a material of the second core and a material of the second shell is less than 10%. As such, good contact between the second core and the second shell (or coating layer) can be achieved to prevent the second shell (or coating layer) from peeling off.

In any embodiment, a content of the manganese element is within a range of 10 wt% to 35 wt%, optionally within a range of 13.3 wt% to 33.2 wt%, more optionally within a range of 15 wt% to 30 wt%, and further optionally within a range of 17 wt% to 20 wt%, based on a total weight of the second positive electrode active material.

In any embodiment, a content of the phosphorus element is within a range of 12 wt% to 25 wt%, optionally within a range of 15 wt% to 20 wt%, and more optionally within a range of 16.8 wt% to 19.5 wt%.

In any embodiment, a weight ratio of the manganese element to the phosphorus element is within a range of 0.71 to 1.85, optionally 0.90 to 1.25, and more optionally 0.95 to 1.20.

By limiting the content of the manganese element within the above range, the stability and density of the second positive electrode active material can be further improved, thereby enhancing the cycle, storage, compaction density, and other performances of the battery. Moreover, a relatively high voltage plateau can be maintained, thereby improving the energy density of the battery.

By limiting the content of the phosphorus element within the above range, the influence of small polaron conduction on the conductivity of the second positive electrode active material can be effectively reduced, and the stability of the lattice structure can be further improved, thereby improving the overall stability of the second positive electrode active material.

By limiting the weight ratio of the manganese element to the phosphorus element within the above range, the manganese dissolution can be further reduced, and the stability and specific capacity of the second positive electrode active material can be improved, thereby improving the cycle performance and storage performance of the battery. Moreover, the impurity phases can be reduced, such that the second positive electrode active material can maintain a relatively high discharge voltage plateau, providing the battery with high energy density.

In any embodiment, a surface of the second positive electrode active material is coated with one or more of carbon and doped carbon; optionally, a surface of the second positive electrode active material is coated with carbon. As such, the conductivity of the second positive electrode active material may be improved.

In any embodiment, the doping element in the doped carbon includes one or more selected from nitrogen, phosphorus, sulfur, boron, and fluorine.

In any embodiment, a coating amount of the second shell is 0.1 wt% to 6 wt% based on a weight of the second core. The coating amount of the coating layer is preferably within the above range, which enables sufficient coating of the second core and, at the same time, further improves the dynamics performance of the battery without compromising the specific capacity of the second positive electrode active material.

In any embodiment, a coating amount of the first coating layer is greater than 0 and less than or equal to 7 wt%, optionally greater than 0 and less than or equal to 6 wt%, more optionally greater than 0 and less than or equal to 5.5 wt%, or 4 wt% to 5.6 wt%, and further optionally greater than 0 and less than or equal to 2 wt%, based on the weight of the second core; and/or, a coating amount of the second coating layer is greater than 0 and less than or equal to 6 wt%, optionally greater than 0 and less than or equal to 5.5 wt%, and more optionally 2 wt% to 4 wt% or 3 wt% to 5 wt%, based on the weight of the second core; and/or, a coating amount of the third coating layer is greater than 0 and less than or equal to 6 wt%, optionally greater than 0 and less than or equal to 5.5 wt%, and more optionally greater than 0 and less than or equal to 2 wt%, based on the weight of the second core.

In any embodiment, the second shell further includes a fourth coating layer coating the third coating layer and a fifth coating layer coating the fourth coating layer; coating amounts of the fourth coating layer and the fifth coating layer are each independently 0.01 wt% to 10 wt%, optionally 0.05 wt% to 10 wt%, more optionally 0.1 wt% to 5 wt%, and further 0.1 wt% to 2 wt%, based on the weight of the second core.

In any embodiment, the second shell is located at 40% to 90%, optionally 60% to 80%, of a surface of the second core. This enables sufficient coating of the second core, thereby improving the dynamics performance of the battery.

In any embodiment, a thickness of the second shell is 1 nm to 15 nm.

In any embodiment, a thickness of the first coating layer is 1 nm to 10 nm, and optionally 2 nm to 10 nm; and/or, a thickness of the second coating layer is 2 nm to 25 nm, optionally 2 nm to 15 nm, and more optionally 3 nm to 15 nm; and/or, a thickness of the third coating layer is 2 nm to 25 nm, and optionally 5 nm to 25 nm.

In any embodiment, the one or more coating layers each independently include one or more selected from a pyrophosphate, a phosphate, and an oxide, and the one or more selected from the pyrophosphate, the phosphate, and the oxide are in a crystalline state; optionally, crystallinities of the pyrophosphate, phosphate, and oxide are each independently 10% to 100%, and more optionally 50% to 100%.

The pyrophosphate and the phosphate with certain crystallinity are not only conducive to fully exerting the capabilities of the pyrophosphate coating layer in reducing manganese dissolution and the excellent lithium-ion conductivity of the phosphate coating layer, and the function of reducing interface side reactions, but also can enable the pyrophosphate coating layer and the phosphate coating layer to achieve better lattice matching, such that a tight combination between the coating layers can be achieved.

In any embodiment, a weight ratio of the pyrophosphate to the phosphate and a weight ratio of the pyrophosphate to the oxide in the second shell are each independently 1:3 to 3:1, and optionally 1:3 to 1:1. As such, by setting the pyrophosphate and the phosphate in a proper weight ratio range or the pyrophosphate and the oxide in a proper weight ratio range, the manganese dissolution can be effectively reduced, and the content of surface lithium impurities can be effectively reduced, such that interface side reactions are reduced, thereby improving the high-temperature storage performance and high-temperature cycle performance of the battery.

In any embodiment, the one or more coating layers each independently include carbon, and the carbon is a mixture of SP2-configuration carbon and SP3-configuration carbon. Optionally, a molar ratio of the SP2-configuration carbon to the SP3-configuration carbon in the carbon is any value within a range of 0.07 to 13, more optionally any value within a range of 0.1 to 10, and further optionally any value within a range of 2.0 to 3.0. By selecting the configuration of the carbon in the carbon coating layer, the comprehensive electric performance of the battery is improved.

In any embodiment, the one or more coating layers each independently include doped carbon, and a mass content of the doping element in the doped carbon is 30% or less; optionally, a mass content of the doping element in the doped carbon is 20% or less. The doping elements within the above content range can not only fully improve the conductivity of the pure carbon layer, but also effectively avoid the excessively high surface activity caused by excessive incorporation of the doping element, thereby effectively controlling the interface side reactions caused by excessive doping in the coating layers.

In any embodiment, the one or more coating layers each independently include doped carbon. In the doped carbon, the doping element is nitrogen element and/or sulfur element, and a mass content of the doping element in the doped carbon is 1% to 15%; or the doping element is phosphorus element, boron element, and/or fluorine element, and a mass content of the doping element in the doped carbon is 0.5% to 5%. Optionally, the doping element is nitrogen, phosphorus, sulfur, boron, or fluorine.

In any embodiment, the one or more coating layers each independently include a pyrophosphate, an interplanar spacing of the pyrophosphate is within a range of 0.293 nm to 0.470 nm, optionally 0.297 nm to 0.462 nm or 0.293 nm to 0.326 nm, and more optionally 0.300 nm to 0.310 nm, and an included angle in the crystal orientation (111) is within a range of 18.00° to 32.57°, optionally 18.00° to 32.00° or 26.41° to 32.57°, more optionally 19.211° to 30.846°, and further optionally 29.00° to 30.00°.

In any embodiment, the one or more coating layers each independently include a phosphate, an interplanar spacing of the phosphate is within a range of 0.244 nm to 0.425 nm, and optionally 0.345 nm to 0.358 nm, and an included angle in the crystal orientation (111) is within a range of 20.00° to 37.00°, and optionally 24.25° to 26.45°.

In any embodiment, the first coating layer or the second coating layer includes a phosphate.

As such, the impurity phase in the coating layer can be effectively reduced, thereby improving the specific capacity, cycle performance, and rate capability of the material.

In any embodiment, a lattice change rate of the second positive electrode active material before and after complete lithium deintercalation is 50% or less, optionally 9.8% or less, more optionally 8.1% or less, further optionally 7.5% or less, further more optionally 6% or less, still further more optionally 4% or less, yet still further more optionally 3.8% or less, and yet another still further more optionally 2.0% to 3.8%. As such, the improvement of the rate capability of the battery is facilitated.

In any embodiment, a Li/Mn anti-site defect concentration of the second positive electrode active material is 5.3% or less, optionally 5.1% or less, more optionally 4% or less, further optionally 2.2% or less, further more optionally 2% or less, and still further more optionally 1.5%-2.2% or 0.5% or less. By reducing the Li/Mn anti-site defect concentration, the improvement of the specific capacity and rate capability of the second positive electrode active material is facilitated.

In any embodiment, a surface oxygen valence state of the second positive electrode active material is -1.55 or less, optionally -1.82 or less, more optionally -1.88 or less, further optionally -1.90 or less, further more optionally -1.98 to -1.88, still further more optionally - 1.98 to -1.89, and yet still further more optionally -1.98 to -1.90. By reducing the surface oxygen valence state, the interface side reactions between the second positive electrode active material and the electrolytic solution can be reduced, thereby improving the cycle performance and high-temperature stability of the battery.

In any embodiment, the battery cell further includes a negative electrode plate and a separator.

A second aspect of the present application provides a method for preparing the battery cell according to the first aspect of the present application, which includes the following steps: providing a battery container containing a positive electrode plate and a negative electrode plate, where the positive electrode plate includes a positive electrode current collector and a positive electrode film layer disposed on at least one surface of the positive electrode current collector, the positive electrode film layer includes a positive electrode active material, the positive electrode active material includes a first positive electrode active material and a second positive electrode active material, the first positive electrode active material and the second positive electrode active material enable deintercalation and intercalation of lithium ions, a crystal form of the first positive electrode active material is different from that of the second positive electrode active material, the second positive electrode active material is provided with a one-dimensional ion transport channel, and an ionic conductivity of the first positive electrode active material is greater than that of the second positive electrode active material; uniformly mixing a non-aqueous solvent and an electrolyte salt to obtain an electrolytic solution, where the electrolyte salt includes a lithium salt and a metal Me salt, the lithium salt dissociates into lithium ions and first anions in the electrolytic solution, the metal Me salt dissociates into Me cations and second anions in the electrolytic solution, an ionic radius of the Me cations is greater than that of the lithium ions, a weight content of the lithium ions in the electrolytic solution is denoted as w₁, and a weight content of the Me cations in the electrolytic solution is denoted as w₂, both based on the total weight of the electrolytic solution; and injecting the obtained electrolytic solution into the battery container to obtain a battery cell.

In a charge-discharge test of the battery cell, a total discharge capacity of the battery cell is denoted as Q₁, and a discharge capacity of the battery cell at a discharge voltage of 3.6 V or less is denoted as Q₂, both with a unit of mAh.

The battery cell, when in a state where the remaining capacity is greater than 90%, satisfies a condition of 0.8 ≤ (Q₂/Q₁)/[w₂/(w₁ + w₂)] ≤ 8.5.

The charge-discharge test of the battery cell is performed under the following conditions: at a test temperature of 25 °C, the battery cell is fully charged at 0.5 C, left to stand for 5 min, and then fully discharged at 0.33 C.

A third aspect of the present application provides a battery, which includes the battery cell according to the first aspect of the present application or a battery cell prepared by the method according to the second aspect of the present application.

A fourth aspect of the present application provides an electric device, which includes the battery according to the third aspect of the present application.

The electric device of the present application includes the battery provided by the present application and thus has at least the same advantages as the battery.

### BRIEF DESCRIPTION OF THE DRAWINGS

In order to more clearly illustrate the technical solutions of embodiments of the present application, the drawings required to be used in the embodiments of the present application are briefly described below. Apparently, the drawings in the following description illustrate merely some embodiments of the present application, and those of ordinary skills in the art may still derive other drawings from these drawings without creative efforts.
FIG. 1 is a schematic view of one embodiment of a battery cell of the present application.
FIG. 2 is a schematic exploded view of the embodiment of the battery cell in FIG. 1.
FIG. 3 is a schematic view of one embodiment of a battery module of the present application.
FIG. 4 is a schematic view of one embodiment of a battery pack of the present application.
FIG. 5 is a schematic exploded view of the embodiment of the battery pack shown in FIG. 4.
FIG. 6 is a schematic view of one embodiment of an electric device including the battery of the present application as a power source.
FIG. 7 is a discharge curve of the battery prepared in Example 2.

The drawings are not necessarily to scale. The reference numerals are illustrated as follows: 1: battery pack; 2: upper case body; 3: lower case body; 4: battery module; 5: battery cell; 51: housing; 52: electrode assembly; and 53: cover plate.

### DETAILED DESCRIPTION

Hereinafter, embodiments of the battery cell and the preparation method therefor, the battery, and the electric device of the present application are specifically disclosed in detail with appropriate reference to the drawings. However, unnecessarily detailed descriptions may be omitted. For example, detailed descriptions of well-known matters and repetitive descriptions of actually identical structures may be omitted. This is to avoid unnecessary lengthiness of the following descriptions and to facilitate understanding by those skilled in the art. Additionally, the drawings and the following descriptions are provided to enable those skilled in the art to fully understand the present application and are not intended to limit the subject matter recited in the claims.

The "ranges" disclosed in the present application are defined with lower and upper limits. A given range is defined by selecting a lower limit and an upper limit that delineate the boundaries of a particular range. Ranges defined in this manner may include or exclude the end values and can be combined arbitrarily, which means that any lower limit may be combined with any upper limit to form a range. For example, if ranges of 60-120 and 80-110 are listed for a particular parameter, it is understood that ranges of 60-110 and 80-120 are also anticipated. Additionally, if the minimum range values listed are 1 and 2, and the maximum range values listed are 3, 4, and 5, then the following ranges can all be anticipated: 1-3, 1-4, 1-5, 2-3, 2-4, and 2-5. In the present application, unless otherwise specified, the numerical range "a-b" indicates an abbreviated representation of any combination of real numbers between a and b, where both a and b are real numbers. For example, the numerical range "0-5" indicates that all real numbers between "0-5" are listed herein, and "0-5" is merely an abbreviated representation of a combination of these numerical values. Additionally, when stating that a parameter is an integer ≥ 2, it is equivalent to disclosing that the parameter is, for example, an integer of 2, 3, 4, 5, 6, 7, 8, 9, 10, 11, 12, or the like.

Unless otherwise specified, all embodiments and optional embodiments of the present application can be combined with one another to form new technical solutions, and such technical solutions should be deemed to be included in the disclosure of the present application.

Unless otherwise specified, all technical features and optional technical features of the present application can be combined with one another to form new technical solutions, and such technical solutions should be deemed to be included in the disclosure of the present application.

Unless otherwise specified, all steps of the present application can be performed sequentially or randomly, preferably sequentially. For example, if the method includes steps (a) and (b), it indicates that the method may include steps (a) and (b) performed sequentially or steps (b) and (a) performed sequentially. For example, if the mentioned method may further include step (c), it indicates that step (c) may be added to the method in any order; for example, the method may include steps (a), (b), and (c), or steps (a), (c), and (b), or steps (c), (a), and (b).

Unless otherwise specified, the "include" and "comprise" mentioned in the present application are open-ended or closed-ended. For example, the "include" and "comprise" may mean that other unlisted components may also be included or comprised or that only the listed components are included or comprised.

Unless otherwise specified, the term "or" in the present application is inclusive. For example, the phrase "A or B" means "A, B, or both A and B". More specifically, any one of the following conditions satisfies the condition "A or B": A is true (or present) and B is false (or absent); A is false (or absent) and B is true (or present); or both A and B are true (or present).

Unless otherwise specified, in the present application, the terms "first", "second", and the like are used to distinguish different objects and are not intended to describe a specific order or priority.

In the present application, the terms "a plurality of" and "multiple" mean two or more.

Throughout the specification, substituents of compounds are disclosed in groups or ranges. It is explicitly contemplated that such description includes each individual subcombination of members of these groups and ranges. For example, it is explicitly contemplated that the term "C1-C6 alkyl" individually discloses C1, C2, C3, C4, C5, C6, C1-C6, C1-C5, C1-C4, C1-C3, C1-C2, C2-C6, C2-C5, C2-C4, C2-C3, C3-C6, C3-C5, C3-C4, C4-C6, C4-C5, and C5-C6 alkyl.

Unless otherwise specified, the terms used in the present application have well-known meanings that are commonly understood by those skilled in the art.

Unless otherwise specified, the values of the parameters mentioned in the present application can be measured by various test methods commonly used in the art. For example, they can be measured according to the test methods given in the examples of the present application. Unless otherwise specified, all parameters are tested at 25 °C.

Unless otherwise specified, all ratio parameters referred to in the present application are all compared in the same unit. For example, the ratio of the masses of A and B is 1:1, where the units of the masses of A and B are the same.

The battery mentioned in the embodiments of the present application refers to a single physical module that may include one or more battery cells to provide a higher voltage and capacity. For example, the battery mentioned in the present application may include a battery cell, a battery module, a battery pack, or the like.

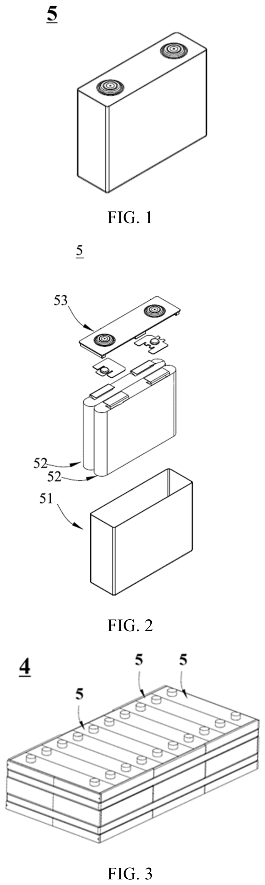

A battery cell is the smallest unit forming a battery and can independently realize the functions of charging and discharging. The battery cell may be cylindrical, rectangular parallelepiped-shaped, or in other shapes, which is also not limited in the embodiments of the present application. FIG. 1 shows a battery cell 5 of a rectangular parallelepiped structure as one example.

When there are a plurality of battery cells, the plurality of battery cells are connected in series, in parallel, or in series-parallel by a busbar component. In some embodiments, the battery may be a battery module. When there are a plurality of battery cells, the plurality of battery cells are arranged and fixed to form one battery module. In some embodiments, the battery may be a battery pack. The battery pack includes a case and a battery cell, and the battery cell or the battery module is accommodated in the case. In some embodiments, the case may be a part of the chassis structure of the vehicle. For example, a part of the case may become at least a part of a bottom plate of the vehicle, or a part of the case may become at least a part of a transverse beam and a longitudinal beam of the vehicle.

In some embodiments, the battery may be an energy storage device. The energy storage device includes an energy storage container, an energy storage electric cabinet, and the like.

The battery cell generally includes an electrode assembly. The electrode assembly generally includes a positive electrode plate and a negative electrode plate, and the electrode assembly may be of a winding structure or a stacked structure, which is not limited in the embodiments of the present application.

The battery cell may also include an outer packaging. The outer packaging may be used for packaging the electrode assembly and an electrolytic solution. The outer packaging may be a hard shell, such as a hard plastic shell, an aluminum shell, or a steel shell. The outer packaging may also be a soft pack, such as a pouch-type soft pack. The soft pack may be made of plastic, such as one or more of polypropylene (PP), polybutylene terephthalate (PBT), and polybutylene succinate (PBS).

In some embodiments, as shown in FIG. 2, the outer packaging may include a housing 51 and a cover plate 53. The housing 51 may include a bottom plate and side plates connected to the bottom plate. The bottom plate and the side plates define, in an enclosing manner, an accommodating cavity. The housing 51 is provided with an opening in communication with the accommodating cavity, and the cover plate 53 is configured to lid the opening to close the accommodating cavity. The electrode assembly 52 is packaged in the accommodating cavity. The number of electrode assemblies 52 included in the battery cell 5 may be one or more and may be adjusted as needed.

In some embodiments, the battery cell may be assembled into a battery module. The number of the battery cells included in the battery module may be a plurality, and the specific number may be adjusted based on the application and capacity of the battery module. FIG. 3 is a schematic view of a battery module 4 as one example. As shown in FIG. 3, in the battery module 4, a plurality of battery cells 5 may be sequentially arranged in a length direction of the battery module 4. Certainly, the arrangement may also be in any other manner. Further, the plurality of battery cells 5 may be fixed by a fastener.

Optionally, the battery module 4 may further include a shell having an accommodating space in which the plurality of battery cells 5 are accommodated.

In some embodiments, the battery module described above may further be assembled into a battery pack. The number of the battery modules included in the battery pack may be adjusted based on the application and capacity of the battery pack.

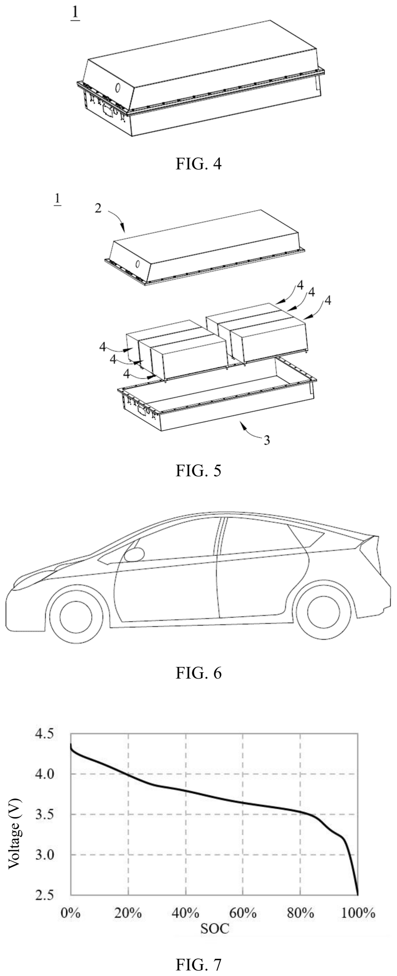

FIGs. 4 and 5 are schematic views of a battery pack 1 as one example. As shown in FIGs. 4 and 5, the battery pack 1 may include a case and a plurality of battery modules 4 disposed in the case. The case includes an upper case body 2 and a lower case body 3. The upper case body 2 is configured to lid the lower case body 3 to form a closed space for accommodating the battery modules 4. The plurality of battery modules 4 may be arranged in any manner in the case.

The battery cell provided in the embodiments of the present application includes a positive electrode plate and an electrolytic solution. The battery cell further includes a negative electrode plate and a separator.

The positive electrode plate includes a positive electrode current collector and a positive electrode film layer disposed on at least one surface of the positive electrode current collector. The positive electrode film layer includes a positive electrode active material. The positive electrode active material includes a first positive electrode active material and a second positive electrode active material. The first positive electrode active material and the second positive electrode active material enable deintercalation and intercalation of lithium ions, crystal forms of the first positive electrode active material and the second positive electrode active material are different, the second positive electrode active material is provided with a one-dimensional ion transport channel, and an ionic conductivity of the first positive electrode active material is greater than that of the second positive electrode active material.

The electrolytic solution includes a non-aqueous solvent and an electrolyte salt. The electrolyte salt includes a lithium salt and a metal Me salt. The lithium salt dissociates into lithium ions and first anions in the electrolytic solution, the metal Me salt dissociates into Me cations and second anions in the electrolytic solution, and an ionic radius of the Me cations is greater than that of the lithium ions. A weight content of the lithium ions in the electrolytic solution is denoted as w₁, and a weight content of Me cations in the electrolytic solution is denoted as w₂, both based on the total weight of the electrolytic solution.

In a charge-discharge test of the battery cell, a total discharge capacity of the battery cell is denoted as Q₁, and a discharge capacity of the battery cell at a discharge voltage of 3.6 V or less is denoted as Q₂, both with a unit of mAh. The charge-discharge test of the battery cell is performed under the following conditions: at a test temperature of 25 °C, the battery cell is fully charged at 0.5 C, left to stand for 5 min, and then fully discharged at 0.33 C.

The battery cell, when in a state where the remaining capacity is greater than 90%, satisfies a condition of 0.8 ≤ (Q₂/Q₁)/[w₂/(w₁ + w₂)] ≤ 8.5.

The battery cell with a remaining capacity of greater than 90% may be a fresh battery cell, for example, a battery cell that has not been used immediately after shipment from the factory, or a battery cell that has been used but still has a remaining capacity of greater than 90%.

The remaining capacity of the battery cell may be characterized by a state of health (SOH) of the battery cell, which represents a percentage of a discharge capacity of the battery cell after full discharge to an initial capacity of the battery cell. The initial capacity of the battery cell has a meaning well known in the art and may be determined by devices and methods known in the art. Typically, after the preparation of the battery cell is completed, the initial capacity of the battery cell is determined and identified on the battery cell product. Therefore, the initial capacity of the battery cell may be determined by the identification of the battery cell. The discharge capacity of the battery cell after full discharge may be determined under the above charge-discharge test conditions.

The positive electrode active material in the positive electrode plate includes a first positive electrode active material and a second positive electrode active material, and the ionic conductivity of the first positive electrode active material is greater than that of the second positive electrode active material. The inventors have found through research that, during the use of the battery, due to the large difference in ionic conductivity (for example, a difference of greater than 4 orders of magnitude) between the first positive electrode active material and the second positive electrode active material, the first positive electrode active material is prone to be overused, such that the surface layer structure of the first positive electrode active material is damaged, thereby leading to a continuous increase in the internal resistance of the battery during the cycling process. In particular, the internal resistance of the battery is relatively high in the later use stage of the battery, which leads to a more significant decline in the cycle performance and power performance of the battery.

The inventors have found through research that, by incorporating a metal Me salt with the ionic radius of cations greater than that of lithium ions into the electrolytic solution, the Me cations in the electrolytic solution will be intercalated into the surface layer of the first positive electrode active material during the discharge process of the battery. Since the ionic radius of the Me cations is greater than that of the lithium ions, the Me cations will get stuck in a transfer channel of the first positive electrode active material for deintercalation and intercalation of the lithium ions during the discharge process of the battery, such that the effect of stabilizing the surface layer structure of the first positive electrode active material can be achieved.

The inventors have further found through research that, when the battery cell satisfies a condition of 0.8 ≤ (Q₂/Q₁)/[w₂/(w₁ + w₂)] ≤ 8.5, the battery may have a relatively low internal resistance increase rate and may also have a long cycle life and good power performance.

The first positive electrode active material hardly contributes to capacity at 3.6 V or less, and therefore, the discharge capacity of the battery at a discharge voltage of 3.6 V or less is mainly provided by the second positive electrode active material. The second positive electrode active material is provided with a one-dimensional ion transport channel. When the discharge capacity ratio Q₂/Q₁ of the battery at a discharge voltage of 3.6 V or less is relatively low, while the weight proportion w₂/(w₁+ w₂) of the Me cations in cations is relatively high, the amount of the Me cations is not matched with the discharge capacity of the battery at the discharge voltage of 3.6 V or less, and excess Me cations easily get stuck in the ion transport channel of the second positive electrode active material during the discharge process of the battery, such that the ion transport channel is blocked, thereby affecting the cycle performance and the power performance of the battery. When the discharge capacity ratio Q₂/Q₁ of the battery is relatively high at a discharge voltage of 3.6 V or less, while the weight proportion w₂/(w₁ + w₂) of the Me cations in cations is relatively low, the amount of the Me cations is also not matched with the discharge capacity of the battery at the discharge voltage of 3.6 V or less, such that there are not enough Me cations in the electrolytic solution to stabilize the surface layer structure of the first positive electrode active material during the discharge process of the battery, thereby leading to a rapid increase in the internal resistance of the battery, and poor power performance and cycle performance.

(Q₂/Q₁)/[w₂/(w₁ + w₂)] may be 0.8, 0.85, 0.97, 1.1, 1.3, 1.5, 1.7, 2.0, 2.4, 2.8, 3.1, 3.4, 3.9, 4.2, 5.0, 6.0, 6.8, 8.0, 8.5, or a range consisting of any two of the foregoing values. In some embodiments, 1.1 ≤ (Q₂/Q₁)/[w₂/(w₁ + w₂)] ≤ 6.8, and optionally, 1.7 ≤ (Q₂/Q₁)/[w₂/(w₁ + w₂)] ≤ 3.9. As such, the amount of the Me cations in the electrolytic solution can be better matched with the discharge capacity of the battery at the discharge voltage of 3.6 V or less, thereby further reducing the increase rate of the internal resistance of the battery, and better improving the cycle performance and power performance of the battery.

In some embodiments, 0.29 ≤ Q₂/Q₁ ≤ 0.42, which, for example, may be 0.29, 0.31, 0.34, 0.36, 0.39, 0.40, 0.42, or a range consisting of any two of the foregoing values. Optionally, 0.31 ≤ Q₂/Q₁ ≤ 0.40.

In some embodiments, 0.05 ≤ w₂/(w₁ + w₂) ≤ 0.35, which, for example, may be 0.05, 0.08, 0.10, 0.12, 0.15, 0.18, 0.20, 0.22, 0.25, 0.28, 0.30, 0.32, 0.35, or a range consisting of any two of the foregoing values. Optionally, 0.05 ≤ w₂/(w₁ + w₂) ≤ 0.30.

When w₂/(w₁ + w₂) is within the above range, the stability of the negative electrode interface can be improved, thereby facilitating the improvement of the high-temperature performance of the battery.

The components and their contents in the electrolytic solution may be determined according to methods known in the art. For example, the determination may be performed by gas chromatography-mass spectrometry (GC-MS), ion chromatography (IC), liquid chromatography (LC), nuclear magnetic resonance spectroscopy (NMR), or the like.

In some embodiments, the lithium ions and Me cations in the electrolytic solution may be quantitatively tested by ion chromatography, and w₂/(w₁ + w₂) is calculated. The test standard can refer to GB/T36240-2018.

The ionic radius of the Me cations is greater than that of the lithium ions. In some embodiments, the Me element includes one or more of an alkali metal element and an alkaline earth metal element.

Optionally, the alkali metal element includes one or more of Na and K.

Optionally, the alkaline earth metal element includes one or more of Ca and Mg.

In some embodiments, the first anions may include one or more of PF₆⁻, ClO₄⁻, AsF₆⁻, BF₄⁻, N(CF₃SO₂)₂⁻ (TFSI⁻), CF₃SO₃⁻, N(FSO₂)₂⁻ (FSI⁻), C(SO₂CF₃)₃⁻, PO₂F₂⁻, a difluoro(oxalato)borate ion (DFOB⁻), a bis(oxalato)borate ion (BOB⁻), a difluorobis(oxalato)phosphate ion (DFOP⁻), and a tetrafluoro(oxalato)phosphate ion (TFOP⁻).

In some embodiments, the second anions may include one or more of PF₆⁻, ClO₄⁻, AsF₆⁻, BF₄⁻, N(CF₃SO₂)₂⁻ (TFSI⁻), CF₃SO₃⁻, N(FSO₂)₂⁻ (FSI⁻), C(SO₂CF₃)₃⁻, PO₂F₂⁻, a difluoro(oxalato)borate ion (DFOB⁻), a bis(oxalato)borate ion (BOB⁻), a difluorobis(oxalato)phosphate ion (DFOP⁻), and a tetrafluoro(oxalato)phosphate ion (TFOP⁻).

In some embodiments, the first anion may be the same as the second anion. As such, the increase rate of the internal resistance of the battery can be further reduced, and the cycle performance and power performance of the battery can be better improved.

In some embodiments, the non-aqueous solvent may include one or more of a cyclic carbonate, a chain carbonate, and a carboxylate. As an example, the non-aqueous solvent may include one or more of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethyl methyl sulfone, and diethyl sulfone.

In some embodiments, the electrolytic solution further optionally includes an additive. As an example, the additive may include a negative electrode film-forming additive and a positive electrode film-forming additive, and may also include an additive capable of improving certain performance of the battery, e.g., an additive for improving the overcharge performance of the battery, an additive for improving the high- or low-temperature performance of the battery, or the like, which is not limited in the embodiments of the present application.

The electrolytic solution may be prepared according to methods conventional in the art. For example, components such as a non-aqueous solvent, an electrolyte salt, and optional additives may be mixed uniformly to obtain an electrolytic solution. The order of addition of the materials is not particularly limited. For example, components such as an electrolyte salt and optional additives may be added to a non-aqueous solvent and mixed uniformly to obtain an electrolytic solution.

The difference in crystal form between the first positive electrode active material and the second positive electrode active material means that the crystal systems of the first positive electrode active material and the second positive electrode active material are different. In some embodiments, the first positive electrode active material may include a lithium-containing layered oxide, and the second positive electrode active material may include a lithium-containing phosphate.

The second positive electrode active material includes a lithium-containing phosphate. The lithium-containing phosphate is provided with a one-dimensional ion transport channel, and is generally of an olivine structure. The second positive electrode active material has high stability and generally low production cost, such that the cost of the battery can be reduced, thereby facilitating large-scale production. However, the second positive electrode active material generally has a relatively small compaction density, making it difficult to satisfy the requirements for use in a high energy density battery. The first positive electrode active material includes a lithium-containing layered oxide. The lithium-containing layered oxide has a two-dimensional ion transport channel, and also has a high specific capacity and a high voltage plateau, which is conducive to increasing the energy density of the battery.

Therefore, by using the first positive electrode active material with the second positive electrode active material in combination, it is conducive to obtaining a battery with low cost and high energy density.

The first positive electrode active material and the second positive electrode active material may have a regular morphology, e.g., a spherical shape or a sphere-like shape, or may have an irregular morphology, which is not limited in the embodiments of the present application.

In some embodiments, a weight proportion W₁ of the first positive electrode active material is 10%-90%, and optionally 50%-90% or 70%-90%, based on a total weight of the positive electrode active material.

In some embodiments, a weight proportion W₂ of the second positive electrode active material is 10%-90%, and optionally 10%-50% or 10%-30%, based on the total weight of the positive electrode active material.

As such, the high energy density and long cycle life can be better balanced for the battery.

In some embodiments, a specific surface area of the first positive electrode active material is 0.5 m²/g to 1 m²/g, and optionally 0.6 m²/g to 0.9 m²/g.

In some embodiments, a specific surface area of the second positive electrode active material is 10 m²/g to 20 m²/g, and optionally 12 m²/g to 16 m²/g.

When the specific surface area of the second positive electrode active material is relatively small, the dynamics performance and the cycle performance of the second positive electrode active material are relatively poor, such that the first positive electrode active material is easily overused; when the specific surface area of the second positive electrode active material is relatively large, side reactions of the battery may be increased, which will affect the cycle performance of the battery. Therefore, when the specific surface area of the second positive electrode active material is within the above range, it is conducive to providing the battery with a lower internal resistance increase rate and a longer cycle life.

The specific surface area of the material (e.g., the first positive electrode active material or the second positive electrode active material, etc.) has a meaning well known in the art and may be determined using instruments and methods known in the art. For example, the specific surface area of the material may be tested using the analysis and test method of specific surface area by nitrogen adsorption with reference to GB/T 19587-2017, and calculated by the BET (Brunauer Emmett Teller) method. The test instrument may be the Tri-Star 3020 specific surface area pore size analysis tester from Micromeritics, USA. Before the test, the material powder may be dried in a vacuum oven at 200 °C for 2 h or more. 20 g or more of the material powder may be sampled.

In some embodiments, a powder compaction density P₁ of the first positive electrode active material at 30,000 N is 3.0 g/cm³ or more, optionally 3.2 g/cm³ or more, more optionally 3.3 g/cm³ or more, further optionally 3.4 g/cm³ or more, and further more optionally 3.5 g/cm³ or more.

In some embodiments, a powder compaction density P₂ of the second positive electrode active material at 30,000 N is 1.89 g/cm³ or more, optionally 1.95 g/cm³ or more, more optionally 1.98 g/cm³ or more, further optionally 2.0 g/cm³ or more, further more optionally 2.2 g/cm³ or more, still further more optionally 2.2 g/cm³ or more and 2.8 g/cm³ or less, or 2.2 g/cm³ or more and 2.65 g/cm³ or less.

The higher the powder compaction density is, the larger the weight of the material per unit volume. Therefore, the improvement of the compaction density of the positive electrode plate and the improvement of the volumetric energy density of the battery are facilitated. The powder compaction density may be measured according to GB/T 24533-2009.

### [First positive electrode active material]

In some embodiments, the first positive electrode active material includes a compound represented by formula (I).

LiₐA¹_{b}Ni_{c}Co_{d}B¹ₑC¹_{f}O_{g}D¹ₕ (I)

A¹ includes one or more elements selected from Group IA, Group IIA, Group VIII, Group VIB, and Group IIB; B¹ includes selected from Mn and/or Al; C¹ includes one or more elements selected from Group IA, Group IIA, Group IIIA, Group IVA, Group VA, Group VIA, Group IB, Group IIB, Group IIIB, Group IVB, Group VB, Group VIB, and Group VIII; D¹ includes one or more elements selected from Group VIA and Group VIIA; a is selected from a range of 0.75 to 1.2; b is selected from a range of 0 to 0.2; c is selected from a range of 0.001 to 0.990; d is selected from a range of 0 to 0.990; e is selected from a range of 0.001 to 0.990; f is selected from a range of 0 to 0.1; g is selected from a range of 1.0 to 2.0; h is selected from a range of 0 to 1.0.

Unless otherwise specified, in the above chemical formula, when A¹ includes two or more elements, the above limitation on the range of the b numerical value is not only a limitation on the stoichiometric number of each element as A¹ but also a limitation on the sum of the stoichiometric numbers of all the elements as A¹, unless otherwise specified. For example, when A¹ includes two or more elements, A¹1, A¹2, ..., A¹n, the stoichiometric numbers b1, b2, ..., bn of A¹1, A¹2, ..., A¹n, respectively, all need to fall within the numerical range limited for b in the present application, and the sum of b1, b2, ..., bn also needs to fall within the numerical range.

Similarly, for the case where B¹, C¹, D¹, A², B², C², D², A³, B³, C³, D³, M, M', X, Z, P, Q, or the like mentioned in the embodiments of the present application includes two or more elements, the limitation on the numerical range of the stoichiometric number thereof in the present application also has the similar meaning as described above.

In some embodiments, c + d + e + f = 1.

In some embodiments, g + h = 2.

In some embodiments, A¹ includes one or more elements selected from Na, K, Mg, Rb, Zn, and Zr.

In some embodiments, C¹ includes one or more elements selected from Al, Mg, Ca, Na, Ti, W, Zr, Sr, Cr, Fe, Zn, Cu, Ba, Mo, V, Ce, Nb, Sb, Ta, Ge, Nb, Sc, Ba, B, S, and Y, and optionally includes one or more elements selected from Mg, Ti, W, Zr, Cr, Fe, Zn, Cu, V, Nb, Sr, Sb, and Y.

In some embodiments, D¹ includes one or more elements selected from N, S, F, Cl, and Br, and optionally S and/or F.

In some embodiments, a is selected from a range of 0.9 to 1.1.

In some embodiments, b is selected from a range of 0 to 0.1.

In some embodiments, c is selected from a range of 0.250 to 0.990, and optionally from a range of 0.500 to 0.990.

When the content of the Ni element in the first active material is relatively high, the specific capacity of the first active material is increased. However, in this case, the stability of the surface layer structure of the first positive electrode active material may be relatively poor. By including an appropriate content of Me cations in the electrolytic solution, the cycle performance of the battery may be better improved, and the energy density of the battery may be improved.

In some embodiments, d is selected from a range of 0 to 0.320, and optionally from a range of 0 to 0.100.

When the content of the Co element in the first active material is relatively low, the material cost may be reduced. However, in this case, the stability of the surface layer structure of the first positive electrode active material may be relatively poor. By including an appropriate content of Me cations in the electrolytic solution, the cycle performance of the battery may be better improved, and the manufacturing cost of the battery may be reduced.

In some embodiments, e is selected from a range of 0.001 to 0.450, and optionally from a range of 0.005 to 0.450.

In some embodiments, f is selected from a range of 0.001 to 0.1, and optionally from a range of 0.001 to 0.05.

In some embodiments, g is selected from a range of 1.9 to 2.0, and optionally from a range of 1.95 to 1.99.

In some embodiments, h is selected from a range of 0 to 0.1, and optionally from a range of 0.01 to 0.05.

In some embodiments, the first positive electrode active material includes a first core and a first shell coating the first core. The first core includes the compound represented by formula (I) described above; the first shell includes one or more coating layers. Each of the coating layers has ionic conductivity and/or electronic conductivity.

In some embodiments, the one or more coating layers in the first shell each independently include one or more selected from a phosphate, a pyrophosphate, carbon, doped carbon, an oxide, and a fast-ionic conductor, and optionally include one or more selected from a phosphate, a pyrophosphate, and an oxide.

In some embodiments, the first shell includes one coating layer; optionally, the coating layer includes one or more selected from a phosphate, a pyrophosphate, and an oxide.

In some embodiments, the first shell includes a first coating layer coating the core and a second coating layer coating the first coating layer; optionally, the first coating layer and the second coating layer each independently include one or more selected from a phosphate, a pyrophosphate, and an oxide; more optionally, the first coating layer includes one or more selected from a phosphate and an oxide, and the second coating layer includes one or more selected from a pyrophosphate and an oxide.

In some embodiments, a coating amount of the first shell is 0.005 wt% to 1 wt%, and optionally 0.01 wt% to 0.5 wt%, based on the weight of the first core.

In some embodiments, a thickness of the first shell is 2 nm to 200 nm, and optionally 5 nm to 50 nm.

### [Second positive electrode active material]

In some embodiments, the second positive electrode active material includes a compound represented by formula (II).

Liₘ₁A²ₓ₁Mn_{1-y1}B²_{y1}P_{1-z1}C²_{z1}O₄₋ₙ₁D²ₙ₁ (II)

A² includes one or more elements selected from Group IA, Group IIA, Group IIIA, Group IIB, Group VB, and Group VIB; B² includes one or more elements selected from Group IA, Group IIA, Group IIIA, Group IVA, Group VA, Group IIB, Group IVB, Group VB, Group VIB, and Group VIII; C² includes one or more elements selected from Group IIIA, Group IVA, Group VA, and Group VIA; D² includes one or more elements selected from Group VIA and Group VIIA; m1 is selected from a range of 0.85 to 1.15; x1 is selected from a range of 0 to 0.1; y1 is selected from a range of 0.001 to 0.999; z1 is selected from a range of 0 to 0.5; n1 is selected from a range of 0 to 0.5.

The compound represented by formula (II) is obtained by element doping in lithium manganese phosphate LiMnPO₄, and A², B², C², and D² are elements doped at the Li site, Mn site, P site, and O site of LiMnPO₄, respectively. Without being confined to theory, the performance improvement of lithium manganese phosphate is believed to be related to the reduction of lattice change rate of lithium manganese phosphate during the lithium deintercalation process and the decrease in surface activity. The reduction of the lattice change rate may reduce the difference in lattice constants between the two phases at the grain boundaries, decrease the interfacial stress, and enhance the transport capability of Li⁺ at the interface, thereby improving the rate capability of the second positive electrode active material. However, high surface activity easily leads to severe side reactions at the interface, which accelerates gas generation, electrolytic solution consumption, and damage to the interface, thereby affecting the cycle and other performance of the battery. The lattice change rate can be reduced by Li- and/or Mn-site doping. Mn-site doping can also effectively reduce surface activity, thereby reducing the dissolution of Mn and the side reactions at the interface between the second positive electrode active material and the electrolytic solution. P-site doping accelerates the change rate of Mn-O bond length, and lowers the migration barrier of small polarons in the material, thereby facilitating the improvement of the electronic conductivity. O-site doping has a good effect on reducing the interface side reactions. P- and/or O-site doping also affects the dissolution of Mn caused by anti-site defects and dynamics performance. Therefore, the doping reduces the concentration of anti-site defects in the material, thereby improving the dynamics performance and specific capacity of the material, and can also alter the particle morphology, thereby improving the compaction density. The inventors have surprisingly found that, by doping specific elements in specific amounts at the Mn site and optionally at the Li site, P site, and/or O site of LiMnPO₄, an improvement in the rate capability can be achieved while reducing the dissolution of Mn and the doping elements at the Mn site, such that an improvement in the cycle performance and/or high-temperature stability is achieved, and the specific capacity and compaction density of the material are also improved.

In some embodiments, A² includes one or more elements selected from Rb, Cs, Be, Ca, Sr, Ba, Ga, In, Cd, V, Ta, Cr, Zn, Al, Na, K, Mg, Nb, Mo, and W, and optionally one or more elements selected from Zn, Al, Na, K, Mg, Nb, Mo, and W.

In some embodiments, B² includes one or more elements selected from Rb, Cs, Be, Ca, Sr, Ba, In, Pb, Bi, Cd, Hf, Ta, Cr, Ru, Rh, Pd, Os, Ir, Pt, Zn, Al, Na, K, Mg, Mo, W, Ti, V, Zr, Fe, Ni, Co, Ga, Sn, Sb, Nb, and Ge, and optionally one or more elements selected from Zn, Al, Na, K, Mg, Mo, W, Ti, V, Zr, Fe, Ni, Co, Ga, Sn, Sb, Nb, and Ge.

In some embodiments, C² includes one or more elements selected from B, S, Si, and N.

In some embodiments, D² includes one or more elements selected from S, F, Cl, and Br.

In some embodiments, A² includes any one element selected from Zn, Al, Na, K, Mg, Nb, Mo, and W, and optionally any one element selected from Mg and Nb; and/or,

B² includes one or more elements selected from Ti, V, Zr, Fe, Ni, Mg, Co, Ga, Sn, Sb, Nb, and Ge, optionally at least two elements selected from Ti, V, Zr, Fe, Ni, Mg, Co, Ga, Sn, Sb, Nb, and Ge, more optionally at least two elements selected from Fe, Ti, V, Ni, Co, and Mg, further optionally at least two elements selected from Fe, Ti, V, Co, and Mg, and further more optionally Fe and one or more elements selected from Ti, V, Co, and Mg; and/or,

C² includes any one element selected from B, S, Si, and N, and is optionally S; and/or,

D² includes any one element selected from S, F, Cl, and Br, and is optionally F.

By selecting the doping elements at the Li site within the above range, the lattice change rate during the lithium delithiation process can be further reduced, thereby further improving the rate capability of the battery.

By selecting the doping elements at the Mn site within the above range, the electronic conductivity can be further improved, and the lattice change rate can be further reduced, thereby improving the rate capability and specific capacity of the battery.

By selecting the doping elements at the P site within the above range, the rate capability of the battery can be further improved.

By selecting the doping element at the O site within the above range, the side reactions at the interface can be further reduced, thereby improving the high-temperature performance of the battery.

In some embodiments, m1 is selected from a range of 0.9 to 1.1, and optionally from a range of 0.97 to 1.01.

In some embodiments, x1 is selected from a range of 0.001 to 0.1, and optionally from a range of 0.001 to 0.005.

In some embodiments, y1 is selected from a range of 0.001 to 0.5, optionally from a range of 0.01 to 0.5, and more optionally from a range of 0.2 to 0.5.

In some embodiments, z1 is selected from a range of 0.001 to 0.5, optionally from a range of 0.001 to 0.1, and more optionally from a range of 0.001 to 0.005.

In some embodiments, n1 is selected from a range of 0 to 0.1, and optionally from a range of 0.001 to 0.005.

By selecting the value of y1 within the above range, the specific capacity and rate capability of the second positive electrode active material can be further improved.

By selecting the value of x1 within the above range, the dynamics performance of the second positive electrode active material can be further improved.

By selecting the value of z1 within the above range, the rate capability of the battery can be further improved.

By selecting the value of n1 within the above range, the high-temperature performance of the battery can be further improved.

In some embodiments, y1 is selected from a range of 0.001 to 0.999, and x1 is 0, z1 is 0, and n1 is 0.

In some embodiments, y1 is selected from a range of 0.001 to 0.999, x1 is 0, z1 is selected from a range of 0.001 to 0.5, and n1 is selected from a range of 0.001 to 0.1; or, y1 is selected from a range of 0.001 to 0.999, x1 is selected from a range of 0.001 to 0.1, z1 is 0, and n1 is selected from a range of 0.001 to 0.1; or, y1 is selected from a range of 0.001 to 0.999, x1 is selected from a range of 0.001 to 0.1, z1 is selected from a range of 0.001 to 0.5, n1 is 0; or, y1 is selected from a range of 0.001 to 0.999, x1 is 0, z1 is 0, and n1 is selected from a range of 0.001 to 0.1; or, y1 is selected from a range of 0.001 to 0.999, x1 is 0, z1 is selected from a range of 0.001 to 0.5, and n1 is 0; or, y1 is selected from a range of 0.001 to 0.999, x1 is selected from a range of 0.001 to 0.1, z1 is selected from a range of 0.001 to 0.5, and n1 is selected from a range of 0.001 to 0.1.

As such, by doping specific elements in specific amounts at the Mn site and optionally at the Li site, P site, and/or O site of LiMnPO₄, particularly by doping specific elements in specific amounts at the Mn site and P site of LiMnPO₄ or at the Li site, Mn site, P site, and O site of LiMnPO₄, the rate capability can be improved, and the dissolution of Mn and the doping elements at the Mn site can be reduced, such that the cycle performance and/or high-temperature stability are improved, and the specific capacity and compaction density of the second positive electrode active material are increased.

In some embodiments, y1:z1 is selected from a range of 0.002 to 999, optionally from a range of 0.025 to 999 or from a range of 0.002 to 500, and more optionally from a range of 0.2 to 600, e.g., 0.2, 0.25, 1, 2, 3, 4, 5, 6, 8, 10, 12, 13, 15, 17, 20, 70, 80, 84, 67, 91, 100, 134, 150, 182, 200, 250, 300, 320, 350, 400, 420, 450, 500, 600, 999, or a range consisting of any two of the foregoing values. As such, the defects of the second positive electrode active material can be reduced, and the integrity of the framework structure of the second positive electrode active material can be enhanced, such that the structural stability of the second positive electrode active material is effectively improved, thereby improving the cycling stability of the battery.

In some embodiments, z1:n1 is selected from a range of 0.002 to 500, optionally from a range of 0.2 to 100, and more optionally from a range of 0.2 to 50, e.g., 0.2, 0.8, 1, 1.25, 4, 5, 50, or a range consisting of any two of the foregoing values. As such, the defects of the second positive electrode active material can be further reduced, and the integrity of the framework structure of the second positive electrode active material can be further enhanced, such that the structural stability of the second positive electrode active material is effectively improved, thereby improving the cycling stability of the battery.

In some embodiments, (1-y1):y1 is within a range of 0.1 to 999, optionally within a range of 0.1 to 10 or within a range of 0.67 to 999, more optionally within a range of 1 to 10, further optionally within a range of 1 to 4, and further more optionally within a range of 1.5 to 3.

In some embodiments, a1:x1 is within a range of 1 to 1200, optionally within a range of 9 to 1100, and more optionally within a range of 190 to 998.

Here, y1 represents the sum of the stoichiometric numbers of the doping elements at the Mn site. When the above conditions are satisfied, the energy density and cycle performance of the second positive electrode active material can be further improved.

In some embodiments, z1:(1-z1) is 1:9 to 1:999, and optionally 1:499 to 1:249. When the above conditions are satisfied, the energy density and cycle performance of the second positive electrode active material can be further improved.

In some embodiments, A² includes one or more elements selected from Zn, Al, Na, K, Mg, Nb, Mo, and W; B² includes one or more elements selected from Ti, V, Zr, Fe, Ni, Mg, Co, Ga, Sn, Sb, Nb, and Ge; C² includes one or more elements selected from B, S, Si, and N; D² includes one or more elements selected from S, F, Cl, and Br; m1 is selected from a range of 0.9 to 1.1, x1 is selected from a range of 0.001 to 0.1, y1 is selected from a range of 0.001 to 0.5, z1 is selected from a range of 0.001 to 0.1, and n1 is selected from a range of 0.001 to 0.1.

By simultaneously doping specific elements in specific amounts at the Li site, Mn site, P site, and O site of LiMnPO₄, an improvement in the rate capability can be achieved, while reducing the dissolution of Mn and the doping elements at the Mn site, such that an improvement in the cycle performance and/or high-temperature stability is achieved, and the specific capacity and compaction density of the second positive electrode active material may also be increased.

In some embodiments, B² includes one or more elements selected from Zn, Al, Na, K, Mg, Mo, W, Ti, V, Zr, Fe, Ni, Co, Ga, Sn, Sb, Nb, and Ge, and optionally one or more elements selected from Zn, Fe, Ti, V, Ni, Co, and Mg; C² includes one or more elements selected from B, Si, N, and S; m1 is selected from a range of 0.9 to 1.1, x1 is 0, y1 is selected from a range of 0.001 to 0.5, z1 is selected from a range of 0.001 to 0.1, and n1 is 0.

By simultaneously doping specific elements in specific amounts at the Mn site and P site of LiMnPO₄, the rate capability can be improved, and the dissolution of Mn and the doping elements at the Mn site can be reduced, such that the cycle performance and/or high-temperature stability are improved, and the specific capacity and compaction density of the second positive electrode active material are increased.

In some embodiments, the second positive electrode active material includes a second core and a second shell coating the second core. The second core includes the compound represented by formula (II) described above. The second shell includes one or more coating layers. The coating layers have ionic conductivity and/or electronic conductivity. In practice, each of the coating layers may be a full coating or a partial coating.

By disposing the coating layer having ionic conductivity and/or electronic conductivity on the surface of the second core, a second positive electrode active material having a core-shell structure is provided. When the second positive electrode active material is applied to a battery, the high-temperature cycle performance, cycling stability, and high-temperature storage performance of the battery can be improved.

In some embodiments, the one or more coating layers each independently include one or more selected from a pyrophosphate, a phosphate, carbon, doped carbon, an oxide, a boride, and a polymer.

In some embodiments, the second shell includes one coating layer; optionally, the coating layer includes one or more selected from a pyrophosphate, a phosphate, carbon, doped carbon, an oxide, a boride, and a polymer.

By using the above materials, a coating layer having ionic conductivity and/or electronic conductivity can be obtained, such that the high-temperature cycle performance, cycling stability, and high-temperature storage performance of the battery are improved.

**In** some embodiments, the second shell includes a first coating layer coating the second core and a second coating layer coating the first coating layer; optionally, the first coating layer and the second coating layer each independently include one or more selected from a pyrophosphate, a phosphate, carbon, doped carbon, an oxide, a boride, and a polymer.

By using the above materials as the materials of the coating layers, and disposing two coating layers, the high-temperature cycle performance, cycling stability, and high-temperature storage performance of the battery can be further improved.

**In** some embodiments, the first coating layer includes one or more selected from a pyrophosphate, a phosphate, an oxide, and a boride, and the second coating layer includes one or more selected from carbon and doped carbon.

By using the first coating layer made of a specific material and the second coating layer made of a specific material, the rate capability can be further improved, and the dissolution of Mn and the doping elements at the Mn site can be further reduced, such that the cycle performance and/or high-temperature stability of the battery can be improved.

**In** some embodiments, the second shell includes a first coating layer coating the second core, a second coating layer coating the first coating layer, and a third coating layer coating the second coating layer; optionally, the first coating layer, second coating layer, and third coating layer each independently include one or more selected from a pyrophosphate, a phosphate, carbon, doped carbon, an oxide, a boride, and a polymer.

By using the above materials as the materials of the coating layers, and disposing three coating layers, the dissolution of Mn and the doping elements at the Mn site can be further reduced, such that the high-temperature cycle performance, cycling stability, and high-temperature storage performance of the battery can be further improved.

In some embodiments, the first coating layer includes a pyrophosphate, the second coating layer includes one or more selected from a phosphate, an oxide, and a boride, and the third coating layer includes one or more selected from carbon and doped carbon.

By using the first coating layer made of a specific material, the second coating layer made of a specific material, and the third coating layer made of a specific material, the rate capability is further improved, and the dissolution of Mn and the doping elements at the Mn site is further reduced, such that the cycle performance and/or high-temperature stability of the battery are further improved, and the specific capacity and compaction density of the second positive electrode active material are further increased.

In some embodiments, the pyrophosphate is Mᵢ(P₂O₇)ⱼ. M includes one or more elements selected from Group IA, Group IIA, Group IIIA, Group IB, Group IIB, Group IVB, Group VB, Group VIIB, and Group VIII; i is selected from a range of 1 to 4, and j is selected from a range of 1 to 6.

In some embodiments, the phosphate is Xₚ(PO₄)_{q}. X includes one or more elements selected from Group IA, Group IIA, Group IIIA, Group IB, Group IIB, Group IVB, Group VB, Group VIIB, and Group VIII; p is selected from a range of 1 to 2; q is selected from a range of 1 to 4.

In some embodiments, a doping element in the doped carbon includes one or more selected from Group IIIA, Group VA, Group VIA, and Group VIIA.

In some embodiments, the oxide is M'ₖOₗ. M' includes one or more elements selected from alkali metals, alkaline earth metals, transition metals, Group IIIA elements, Group IVA elements, lanthanide elements, and Sb; k is greater than 0 and less than or equal to 2; 1 is greater than 0 and less than or equal to 5.

In some embodiments, the boride is ZᵥB_{w}. Z includes one or more elements selected from Group IA, Group IIA, Group IIIA, Group IB, Group IIB, Group IVB, Group VB, Group VIIB, and Group VIII; v is selected from a range of 1 to 7, and w is selected from a range of 1 to 2.

In some embodiments, the polymer includes one or more selected from a polysaccharide and a derivative thereof, and a polysiloxane.

By using the above materials as the coating layers, the dissolution of Mn and the doping elements at the Mn site can be further reduced, such that the specific capacity and compaction density of the second positive electrode active material are further increased, and the rate capability, high-temperature cycle performance and high-temperature storage performance of the battery are further improved.

In some embodiments, M, X, and Z each independently include one or more elements selected from Li, Fe, Ni, Mg, Co, Cu, Zn, Ti, Ag, Zr, Nb, Mn, and Al; and/or, the doping element in the doped carbon includes one or more selected from nitrogen, phosphorus, sulfur, boron, and fluorine; and/or, M' includes one or more elements selected from Li, Be, B, Na, Mg, Al, Si, P, K, Ca, Sc, Ti, V, Cr, Mn, Fe, Co, Ni, Cu, Zn, Ga, Ge, As, Se, Sr, Y, Zr, Nb, Mo, Tc, Ru, Rh, Pd, Ag, Cd, In, Sn, Sb, Te, W, La, and Ce, optionally one or more elements selected from Mg, Al, Si, Zn, Zr, and Sn; and/or, the polysiloxane is selected from one or more of a polysiloxane of a linear structure and a polysiloxane of a cyclic structure; and/or, the polysaccharide is selected from one or more of a plant polysaccharide and a marine polysaccharide.

By using the above specific materials as the coating layers, the dissolution of Mn and the doping elements at the Mn site can be further reduced, such that the high-temperature cycle performance and high-temperature storage performance of the battery are further improved.

In some embodiments, the second positive electrode active material includes a second core and a second shell coating the second core.

The second core includes Liₘ₁Mn_{1-y1}B²_{y1}P_{1-z1}C²_{z1}O₄, where m1 is selected from a range of 0.9 to 1.1, y1 is selected from a range of 0.001 to 0.5, z1 is selected from a range of 0.001 to 0.1, B² includes one or more elements selected from Ti, V, Zr, Fe, Ni, Mg, Co, Ga, Sn, Sb, Nb, and Ge, and C² includes one or more elements selected from B, S, Si, and N.

The second shell includes a first coating layer coating the second core and a second coating layer coating the first coating layer. The first coating layer includes pyrophosphate MP₂O₇ and phosphate XPO₄, where M and X each independently include one or more elements selected from Li, Fe, Ni, Mg, Co, Cu, Zn, Ti, Ag, Zr, Nb, and Al; the second coating layer includes carbon.

The second positive electrode active material may be of a core-shell structure having two coating layers. The element B² doped at the manganese site of the lithium manganese phosphate is conducive to reducing the lattice change rate of the lithium manganese phosphate during the lithium deintercalation process, thereby improving the structural stability of the second positive electrode active material, and greatly reducing the dissolution of manganese and reducing the oxygen activity on the surface of particles. The element C² doped at the phosphorus site is conducive to altering the difficulty of the Mn-O bond length variation, thereby lowering the migration barrier of lithium ions, promoting the migration of lithium ions, and improving the rate capability of the battery. The first coating layer of the second positive electrode active material includes a pyrophosphate and a phosphate. Since the migration barrier of transition metals in the pyrophosphate is relatively high (> 1 eV), the dissolution of the transition metals can be effectively reduced. Meanwhile, the phosphate exhibits excellent lithium-ion conductivity and can reduce the content of surface lithium impurities. In addition, since the second coating layer is a carbon-containing layer, the conductive performance and desolvation capability of LiMnPO₄ can be effectively improved. In addition, the "barrier" effect of the second coating layer may further reduce the migration of manganese ions into the electrolytic solution and reduce the corrosion of the second active material by the electrolytic solution. Therefore, by performing specific element doping and surface coating on the lithium manganese phosphate, the dissolution of Mn during the lithium intercalation process can be effectively reduced, and the migration of lithium ions is promoted, such that the rate capability of the battery is improved, and the cycle performance and high-temperature performance of the battery are enhanced.

In some embodiments, the second positive electrode active material includes a second core and a second shell coating the second core.

The second core includes Liₘ₁Mn_{1-y1}B²_{y1}P_{1-z1}C²_{z1}O₄, where m1 is selected from a range of 0.9 to 1.1, y1 is selected from a range of 0.001 to 0.5, z1 is selected from a range of 0.001 to 0.1, B² includes one or more elements selected from Ti, V, Zr, Fe, Ni, Mg, Co, Ga, Sn, Sb, Nb, and Ge, and C² includes one or more elements selected from B, S, Si, and N.

The second shell includes a first coating layer coating the second core, a second coating layer coating the first coating layer, and a third coating layer coating the second coating layer.

The first coating layer includes pyrophosphate LiᵣQP₂O₇ and/or Qₛ(P₂O₇)ₜ, where 0 ≤ r ≤ 2, 1 ≤ s ≤ 4, 1 ≤ t ≤ 6, and Q in the pyrophosphate LiᵣQP₂O₇ and/or Qₛ(P₂O₇)ₜ each independently includes one or more elements selected from Fe, Ni, Mg, Co, Cu, Zn, Ti, Ag, Zr, Nb, and Al.

The second coating layer includes crystalline phosphate XPO₄, where X includes one or more elements selected from Li, Fe, Ni, Mg, Co, Cu, Zn, Ti, Ag, Zr, Nb, and Al.

The third coating layer includes carbon.

As such, the second positive electrode active material can improve the specific capacity and cycle performance of the battery.

The second positive electrode active material is of a core-shell structure. By doping the element B² and element C² at the manganese site and phosphorus site of the second core, respectively, not only can the manganese dissolution be effectively reduced, thereby reducing the manganese ions migrating to the negative electrode, decreasing the electrolytic solution consumed due to the decomposition of the SEI film, and enhancing the cycle performance of the battery, but also the adjustment of the Mn-O bond can be promoted, thereby lowering the migration barrier of lithium ions, promoting the migration of lithium ions, and enhancing the rate capability of the battery. By coating the second core with the first coating layer including the pyrophosphate, the migration resistance of manganese can be further increased to reduce the dissolution of manganese, the content of lithium impurities on the surface can be reduced, and the contact between the second core and the electrolytic solution can be reduced, such that the interface side reactions and the gas generation can be reduced, thereby enhancing the high-temperature storage performance and cycle performance of the battery. By further coating the phosphate coating layer having excellent lithium ion conductivity, the interface side reactions on the surface of the second positive electrode active material can be effectively reduced, thereby improving the high-temperature cycle and storage performance of the battery. By still further coating the carbon layer as a third coating layer, the dynamics performance of the battery can be further improved. In addition, in the second core, the element B² doped at the manganese site is also conducive to reducing the lattice change rate of lithium manganese phosphate in the material during the lithium deintercalation process, thereby improving the structural stability of the second positive electrode active material, and greatly reducing the dissolution of manganese and reducing the oxygen activity on the surface of particles; the element C² doped at the phosphorus site is also conducive to changing the difficulty of the Mn-O bond length variation, thereby improving the electronic conductivity and reducing the migration barrier of lithium ions, promoting the migration of lithium ions, and enhancing the rate capability of the battery.

In addition, by maintaining electrical neutrality in the entire second core system, defects and impurity phases in the second positive electrode active material can be minimized. If an excessive amount of transition metals (e.g., manganese) is present in the second positive electrode active material, since the material system is structurally stable, the excess transition metals are likely to precipitate as simple substances or form impurity phases inside the crystal lattice. Maintaining electrical neutrality can minimize such impurity phases. In addition, maintaining the electrical neutrality of the system can, under some circumstances, also lead to the generation of lithium vacancies in the material, thereby making the dynamics performance of the second positive electrode active material more excellent.

In some embodiments, the one or more coating layers in the second shell that are most distal to the second core each independently include one or more selected from a polysiloxane, a polysaccharide, and a polysaccharide derivative.

As such, the coating uniformity can be enhanced, and the interface side reactions caused by high voltage can be effectively blocked, thereby enhancing the high-temperature cycle performance and high-temperature storage performance of the second positive electrode active material. Moreover, the coating layers have good ionic conductivity, which is conducive to increasing the specific capacity of the second positive electrode active material and reducing the heat generation of the battery.

In some embodiments, the polysiloxane includes a structural unit represented by formula (i).

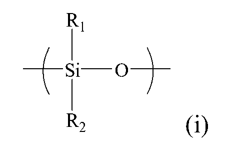

R₁ and R₂ are independently selected from H, -COOH, -OH, -SH, -CN, -SCN, amino, a phosphate group, a carboxylate group, an amide group, an aldehyde group, sulfonyl, a polyether segment, C1-C20 aliphatic hydrocarbyl, C1-C20 haloaliphatic hydrocarbyl, C1-C20 heteroaliphatic hydrocarbyl, C1-C20 haloheteroaliphatic hydrocarbyl, C6-C20 aromatic hydrocarbyl, C6-C20 haloaromatic hydrocarbyl, C2-C20 heteroaromatic hydrocarbyl, and C2-C20 haloheteroaromatic hydrocarbyl.

Optionally, R₁ and R₂ are independently selected from H, amino, a phosphate group, a polyether segment, C1-C8 alkyl, C1-C8 haloalkyl, C1-C8 heteroalkyl, C1-C8 haloheteroalkyl, C2-C8 alkenyl, and C2-C8 haloalkenyl.

In some embodiments, the polysiloxane further includes a capping group. The capping group includes one or more of the group consisting of the following functional groups: polyether, C1-C8 alkyl, C1-C8 haloalkyl, C1-C8 heteroalkyl, C1-C8 haloheteroalkyl, C2-C8 alkenyl, C2-C8 haloalkenyl, C6-C20 aromatic hydrocarbyl, C1-C8 alkoxy, C2-C8 epoxy, hydroxy, C1-C8 hydroxyalkyl, amino, C1-C8 aminoalkyl, carboxy, and C1-C8 carboxyalkyl.

In some embodiments, the polysiloxane includes one or more selected from polydimethylsiloxane, polydiethylsiloxane, polymethylethylsiloxane, polymethylvinylsiloxane, polyphenylmethylsiloxane, polymethylhydrosiloxane, carboxy-functionalized polysiloxane, epoxy-terminated polysiloxane, methoxy-terminated polydimethylsiloxane, hydroxypropyl-terminated polydimethylsiloxane, polymethylchloropropylsiloxane, hydroxy-terminated polydimethylsiloxane, polymethyltrifluoropropylsiloxane, perfluorooctylmethylpolysiloxane, aminoethylaminopropylpolydimethylsiloxane, terminal polyether polydimethylsiloxane, pendant aminopropylpolysiloxane, aminopropyl-terminated polydimethylsiloxane, pendant phosphate-grafted polydimethylsiloxane, pendant polyether-grafted polydimethylsiloxane, 1,3,5,7-octamethylcyclotetrasiloxane, 1,3,5,7-tetrahydro-1,3,5,7-tetramethylcyclotetrasiloxane, cyclopentasiloxane, 2,4,6,8-tetramethylcyclotetrasiloxane, 2,4,6,8-tetramethyl-2,4,6,8-tetravinylcyclotetrasiloxane, cyclopolymethylvinylsiloxane, hexadecamethylcyclooctasiloxane, tetradecamethylcycloheptasiloxane, and cyclopolydimethylsiloxane.

In some embodiments, number-average molecular weights of the polysiloxane, the polysaccharide, and the polysaccharide derivative are each independently 300,000 or less, optionally 10,000 to 200,000, more optionally 20,000 to 120,000, and further optionally 400 to 80,000.

The number-average molecular weights of the polysiloxane, polysaccharide, and polysaccharide derivatives may be determined by methods known in the art, for example, using gel permeation chromatography (GPC). The test instrument may be the PL-GPC 220 high-temperature gel permeation chromatograph.

In some embodiments, a mass percentage content of polar functional groups in the polysiloxane is α, where 0 ≤ α < 50%, and optionally 5% ≤ α ≤ 30%.

The "mass percentage content of polar functional groups in the polysiloxane" refers to the mass proportion of polar functional groups in R₁, R₂, and the capping groups in the polysiloxane. The polar functional groups include one or more of -COOH, -OH, -SH, -CN, - SCN, amino (including -NH₂ and -NH-), a phosphate group, a carboxylate group (-COO-), an amide group (-CONH-), an aldehyde group (-CHO), sulfonyl (-S(=O)₂-), a polyether segment, halogen, alkoxy, and epoxy. When the above polar functional groups are directly bonded to the silicon atoms, α represents the mass fraction of these polar functional groups in the polysiloxane; when the above polar functional groups are not directly bonded to the silicon atoms, α represents the sum of the mass fractions of the polar functional groups and the divalent to tetravalent methyl groups (e.g., -CH₂, -CH-, -C-, etc.) directly bonded thereto in the polysiloxane, where the "divalent to tetravalent methyl groups" refer to carbon atoms directly bonded to the polar functional groups and located between the polar functional groups and the silicon atoms and other nonpolar functional groups bonded to the carbon atoms. Taking polymethyltrifluoropropylsiloxane as an example, α refers to the mass percentage content of - CF₃, excluding the ethylene; taking polymethylchloropropylsiloxane as an example, α refers to the mass percentage content of -CH₂Cl, excluding the ethylene; taking hydroxypropyl-terminated polydimethylsiloxane as an example, α refers to the mass percentage content of - CH₂OH. The mass percentage content of the polar functional groups in the polysiloxane may be determined by methods known in the art, for example, by the titration method (e.g., acid-base titration, redox titration, or precipitation titration), infrared spectroscopy, and nuclear magnetic resonance spectroscopy.

In some embodiments, substituents attached to saccharide units in the polysaccharide and the polysaccharide derivative each independently include one or more of the group consisting of the following functional groups: -OH, -COOH and a salt thereof, -R-OH, -SO₃H and a salt thereof, -R-OH, -R-SO₃H and a salt thereof, a sulfate group, and alkoxy, where R represents alkylene, and optionally C1-C5 alkylene.

Optionally, substituents attached to saccharide units in the polysaccharide and the polysaccharide derivative each independently include one or more of the group consisting of the following functional groups: -OH, -COOH, -COOLi, -COONa, -COOK, -SO₃H, -SO₃Li, - SO₃Na, -SO₃K, -CH₂-SO₃H, -CH₂-SO₃Li, -CH₂-SO₃Na, -CH₂-SO₃K, methoxy, and ethoxy.

The term "substituents attached to the saccharide units" includes all groups attached to the backbone of the saccharide units.

In some embodiments, the polysaccharide includes one or more selected from pectin, carboxymethyl starch, hydroxypropyl starch, dextrin, cellulose ether, carboxymethyl chitosan, hydroxyethyl cellulose, carboxymethylcellulose, carboxypropyl methyl cellulose, guar gum, sesbania gum, arabic gum, lithium alginate, sodium alginate, potassium alginate, fucoidan, agar, carrageenan, carrageenin, xanthan gum, and fenugreek gum.

In some embodiments, mass percentage contents of the substituents attached to the saccharide units in the polysaccharide and the polysaccharide derivative are each independently 20% to 85%, and optionally 30% to 78%. The mass percentage contents of the substituents attached to the saccharide units in the polysaccharide and polysaccharide derivatives may be determined by methods known in the art, for example, by the titration method (e.g., acid-base titration, redox titration, or precipitation titration), infrared spectroscopy, and nuclear magnetic resonance spectroscopy.

In some embodiments, the lattice mismatch degree between a material of the second core and a material of the second shell is less than 10%. As such, good contact between the second core and the second shell (or coating layer) can be achieved to prevent the second shell (or coating layer) from peeling off.

In some embodiments, a content of the manganese element is within a range of 10 wt% to 35 wt%, optionally within a range of 13.3 wt% to 33.2 wt%, more optionally within a range of 15 wt% to 30 wt%, and further optionally within a range of 17 wt% to 20 wt%, based on the weight of the positive electrode active material.

In some embodiments, a content of the phosphorus element is within a range of 12 wt% to 25 wt%, optionally within a range of 15 wt% to 20 wt%, and more optionally within a range of 16.8 wt% to 19.5 wt%, based on the weight of the positive electrode active material.

In some embodiments, a weight ratio of the manganese element to the phosphorus element is within a range of 0.71 to 1.85, optionally 0.90 to 1.25, and more optionally 0.95 to 1.20, based on the weight of the positive electrode active material.

In the case where only the second core of the second positive electrode active material contains manganese, the content of manganese may correspond to the content of the second core.

By limiting the content of the manganese element within the above range, the stability and density of the second positive electrode active material can be further improved, thereby enhancing the cycle, storage, compaction density, and other performances of the battery. Moreover, a relatively high voltage plateau can be maintained, thereby improving the energy density of the battery.

By limiting the content of the phosphorus element within the above range, the influence of small polaron conduction on the conductivity of the second positive electrode active material can be effectively reduced, and the stability of the lattice structure can be further improved, thereby improving the overall stability of the second positive electrode active material.

By limiting the weight ratio of the manganese element to the phosphorus element within the above range, the manganese dissolution can be further reduced, and the stability and specific capacity of the second positive electrode active material can be improved, thereby improving the cycle performance and storage performance of the battery. Moreover, the impurity phases can be reduced, such that the second positive electrode active material can maintain a relatively high discharge voltage plateau, providing the battery with high energy density.

The manganese element and the phosphorus element can be measured by the technical means conventional in the field. In particular, the contents of manganese element and phosphorus element are determined by the following method: dissolving a material in dilute hydrochloric acid (with a concentration of 10%-30%), testing contents of elements in the solution by using ICP, and measuring and converting a content of the manganese element to obtain a weight proportion of the manganese element.

In some embodiments, a surface of the second positive electrode active material is coated with one or more of carbon and doped carbon; optionally, a surface of the second positive electrode active material is coated with carbon. As such, the conductivity of the second positive electrode active material may be improved.

In some embodiments, the doping element in the doped carbon includes one or more selected from nitrogen, phosphorus, sulfur, boron, and fluorine. This facilitates control of the performance of the doped carbon layer.

In some embodiments, a coating amount of the second shell (only one coating layer) is 0.1 wt% to 6 wt% based on the weight of the second core. The coating amount of the coating layer is preferably within the above range, which enables sufficient coating of the second core and, at the same time, further improves the dynamics performance of the battery without compromising the specific capacity of the second positive electrode active material.

In some embodiments, a coating amount of the first coating is greater than 0 and less than or equal to 7 wt%, optionally greater than 0 and less than or equal to 6 wt%, more optionally greater than 0 and less than or equal to 5.5 wt%, or 4 wt% to 5.6 wt%, and further optionally greater than 0 and less than or equal to 2 wt%, based on the weight of the second core; and/or, a coating amount of the second coating layer is greater than 0 and less than or equal to 6 wt%, optionally greater than 0 and less than or equal to 5.5 wt%, and more optionally 2 wt% to 4 wt% or 3 wt% to 5 wt%, based on the weight of the second core; and/or, a coating amount of the third coating layer is greater than 0 and less than or equal to 6 wt%, optionally greater than 0 and less than or equal to 5.5 wt%, and more optionally greater than 0 and less than or equal to 2 wt%, based on the weight of the second core.

In some embodiments, the second shell further includes a fourth coating layer coating the third coating layer and a fifth coating layer coating the fourth coating layer.

Coating amounts of the fourth coating layer and the fifth coating layer are each independently 0.01 wt% to 10 wt%, optionally 0.05 wt% to 10 wt%, more optionally 0.1 wt% to 5 wt%, and further 0.1 wt% to 2 wt%, based on the weight of the second core.

In the second positive electrode active material having a core-shell structure according to the present application, the coating amounts of the coating layers are preferably within the above range, which enables sufficient coating of the second core and, at the same time, further improves the dynamics performance of the battery without compromising the specific capacity of the second positive electrode active material.

In some embodiments, the second shell is located at 40% to 90%, optionally 60% to 80%, of a surface of the second core. This enables sufficient coating of the second core, thereby improving the dynamics performance of the battery.

In some embodiments, a thickness of the second shell (only one coating layer) is 1 nm to 15 nm.

In some embodiments, a thickness of the first coating layer is 1 nm to 10 nm, and optionally 2 nm to 10 nm; and/or, a thickness of the second coating layer is 2 nm to 25 nm, optionally 2 nm to 15 nm, and more optionally 3 nm to 15 nm; and/or, a thickness of the third coating layer is 2 nm to 25 nm, and optionally 5 nm to 25 nm.

In some embodiments, a thickness of the first coating layer may be about 2 nm, about 3 nm, about 4 nm, about 5 nm, about 6 nm, about 7 nm, about 8 nm, about 9 nm, about 10 nm, or within any range of any of the above values.

In some embodiments, a thickness of the second coating layer may be about 2 nm, about 3 nm, about 4 nm, about 5 nm, about 6 nm, about 7 nm, about 8 nm, about 9 nm, about 10 nm, about 11 nm, about 12 nm, about 13 nm, about 14 nm, about 15 nm, or within any range of any of the above values.

In some embodiments, a thickness of the third coating layer may be about 2 nm, about 3 nm, about 4 nm, about 5 nm, about 6 nm, about 7 nm, about 8 nm, about 9 nm, about 10 nm, about 11 nm, about 12 nm, about 13 nm, about 14 nm, about 15 nm, about 16 nm, about 17 nm, about 18 nm, about 19 nm, about 20 nm, about 21 nm, about 22 nm, about 23 nm, about 24 nm, about 25 nm, or within any range of any of the above values.

The first coating layer has the above thickness range, which can further reduce adverse effects on the dynamics performance of the second positive electrode active material.

The second coating layer has the above thickness range, which makes the surface structure of the second coating layer stable and results in fewer side reactions with the electrolytic solution, such that interface side reactions can be effectively reduced, thereby enhancing the high-temperature performance of the battery.

The third coating layer has the above thickness range, which can enhance the conductive performance of the second positive electrode active material and improve the compaction density of the positive electrode plate prepared by using the second positive electrode active material.

The thickness of the coating layer is mainly tested by FIB, and the specific method may include the following steps: randomly selecting a single particle from a second positive electrode active material powder to be tested, cutting a slice with a thickness of about 100 nm from the middle position or a vicinity of the middle position of the selected particle, then performing a TEM test on the slice, measuring a thickness of the coating layer at 3-5 positions, and taking an average value.

In some embodiments, the one or more coating layers each independently include one or more selected from a pyrophosphate, a phosphate, and an oxide, and the one or more selected from the pyrophosphate, the phosphate, and the oxide are in a crystalline state.

Optionally, crystallinities of the pyrophosphate, phosphate, and oxide are each independently 10% to 100%, and more optionally 50% to 100%.

Herein, the crystalline state means that the crystallinity is 50% or more, i.e., 50% to 100%. That is, the crystalline pyrophosphate and crystalline phosphate of the present application, when present, have a crystallinity of 50% to 100%.

The pyrophosphate and the phosphate with certain crystallinity are not only conducive to fully exerting the capabilities of the pyrophosphate coating layer in reducing manganese dissolution and the excellent lithium-ion conductivity of the phosphate coating layer, and the function of reducing interface side reactions, but also can enable the pyrophosphate coating layer and the phosphate coating layer to achieve better lattice matching, such that a tight combination between the coating layers can be achieved.

It should be noted that the crystallinity may be adjusted, for example, by adjusting, the process conditions of the sintering process, such as the sintering temperature and the sintering time. The crystallinity may be measured by methods known in the art, for example, by the X-ray diffraction method, the density method, infrared spectroscopy, differential scanning calorimetry, the nuclear magnetic resonance absorption method, and the like. Specifically, the method for testing the crystallinity of the second positive electrode active material by the X-ray diffraction method may include the following steps:

A certain amount of second positive electrode active material powder is taken and determined for the total scattering intensity by X-rays, where the total scattering intensity is the sum of the scattering intensities of substances in the entire space, which is only related to the intensity of primary rays, the chemical structure of the second positive electrode active material powder, the total number of electrons participating in diffraction, namely the mass, and is not related to the order state of the sample; then, the crystalline scattering is separated from the amorphous scattering on the diffraction pattern, and the crystallinity is the ratio of the scattering intensity of the crystalline part to the total scattering intensity.

In some embodiments, a weight ratio of the pyrophosphate to the phosphate and a weight ratio of the pyrophosphate to the oxide in the second shell are each independently 1:3 to 3:1, and optionally 1:3 to 1:1. As such, by setting the pyrophosphate and the phosphate in a proper weight ratio range or the pyrophosphate and the oxide in a proper weight ratio range, the manganese dissolution can be effectively reduced, and the content of surface lithium impurities can be effectively reduced, such that interface side reactions are reduced, thereby improving the high-temperature storage performance and high-temperature cycle performance of the battery.

In some embodiments, the one or more coating layers each independently include carbon, and the carbon is a mixture of SP2-configuration carbon and SP3-configuration carbon. Optionally, a molar ratio of the SP2-configuration carbon to the SP3-configuration carbon in the carbon is any value within a range of 0.07 to 13, more optionally any value within a range of 0.1 to 10, and further optionally any value within a range of 2.0 to 3.0.

In some embodiments, the molar ratio of the SP2-configuration carbon to the SP3-configuration carbon may be about 0.1, about 0.2, about 03, about 0.4, about 0.5, about 0.6, about 0.7, about 0.8, about 0.9, about 1, about 2, about 3, about 4, about 5, about 6, about 7, about 8, about 9, about 10, or within any range of any of the above values.

In the present application, "about" a certain numerical value means a range, which is a range of ± 10% of the numerical value.

By selecting the configuration of the carbon in the carbon coating layer, the comprehensive electric performance of the battery is improved. Specifically, by using a mixture of SP2-configuration carbon and SP3-configuration carbon and limiting the ratio of the SP2-configuration carbon to the SP3-configuration carbon to a certain range, the following situations can be avoided: If the carbon in the coating layer is entirely in an amorphous SP3 configuration, the conductivity is poor; if the carbon in the coating layer is entirely in a graphitized SP2 configuration, although the conductivity is good, the number of lithium ion paths is small, which is not conducive to the lithium deintercalation. In addition, by limiting the molar ratio of the SP2-configuration carbon to the SP3-configuration carbon to the above range, not only can good conductivity be achieved, but also the transport of lithium ions is promoted, which is conducive to the realization of battery functions and cycle performance.

The mixing ratio of the SP2 configuration and the SP3 configuration of carbon may be controlled by sintering conditions such as sintering temperature and sintering time. The molar ratio of the SP2-configuration carbon to the SP3-configuration carbon may be determined by Raman spectroscopy. The specific test method is as follows: By peak deconvolution of the energy spectrum obtained from the Raman test, Id/Ig (where Id represents the peak intensity of the SP3-configuration carbon and Ig represents the peak intensity of the SP2-configuration carbon) is obtained, and thus the ratio between the two is confirmed.

In some embodiments, the one or more coating layers each independently include doped carbon, a mass content of the doping element in the doped carbon is 30% or less; optionally, a mass content of the doping element in the doped carbon is 20% or less. The doping elements within the above content range can not only fully improve the conductivity of the pure carbon layer, but also effectively avoid the excessively high surface activity caused by excessive incorporation of the doping element, thereby effectively controlling the interface side reactions caused by excessive doping in the coating layers.

In some embodiments, the one or more coating layers each independently include doped carbon. In the doped carbon, the doping element is nitrogen element and/or sulfur element, and a mass content of the doping element in the doped carbon is 1% to 15%; or the doping element is phosphorus element, boron element, and/or fluorine element, and a mass content of the doping element in the doped carbon is 0.5% to 5%.

Optionally, the doping element is nitrogen, phosphorus, sulfur, boron, or fluorine.

Since the atomic radii of the nitrogen atom and sulfur atom are more similar to those of the carbon atom, the carbon skeleton is not easy to be damaged, and therefore, when the doping amounts of the nitrogen atom and sulfur atom are within the relatively broad range above, the conductivity of the doped carbon layer can be fully exerted, and the lithium ion transport and lithium ion desolvation capability can be promoted.

Since there are differences in the atomic radii between the phosphorus atom, boron atom, and/or fluorine atom and the carbon atom, the carbon skeleton is easy to be damaged by excessive doping, and therefore, when the doping amounts of the phosphorus atom, boron atom, and/or fluorine atom are within the relatively small range above, the conductivity of the doped carbon layer can be fully exerted, and the lithium ion transport and lithium ion desolvation capability can be promoted.

In some embodiments, the one or more coating layers each independently include a pyrophosphate, an interplanar spacing of the pyrophosphate is within a range of 0.293 nm to 0.470 nm, optionally 0.297 nm to 0.462 nm or 0.293 nm to 0.326 nm, and more optionally 0.300 nm to 0.310 nm, and an included angle in the crystal orientation (111) is within a range of 18.00° to 32.57°, optionally 18.00° to 32.00° or 26.41° to 32.57°, more optionally 19.211° to 30.846°, and further optionally 29.00° to 30.00°.

In some embodiments, the one or more coating layers each independently include a phosphate, an interplanar spacing of the phosphate is within a range of 0.244 nm to 0.425 nm, and optionally 0.345 nm to 0.358 nm, and an included angle in the crystal orientation (111) is within a range of 20.00° to 37.00°, and optionally 24.25° to 26.45°.

In some embodiments, the first coating layer or the second coating layer includes a phosphate.

Crystalline substances are used in both the first coating layer and second coating layer in the second positive electrode active material, and the interplanar spacings and included angles of the crystalline substances are within the above ranges. As such, the impurity phase in the coating layer can be effectively reduced, thereby improving the specific capacity, cycle performance, and rate capability of the material.

In some embodiments, a lattice change rate of the second positive electrode active material before and after complete lithium deintercalation is 50% or less, optionally 9.8% or less, more optionally 8.1% or less, further optionally 7.5% or less, further more optionally 6% or less, still further more optionally 4% or less, yet still further more optionally 3.8% or less, and yet another still further more optionally 2.0% to 3.8%.

By reducing the lattice change rate, the transport of Li ions can be made easier, that is, the Li ions have stronger migration capability in the second positive electrode active material, which is conducive to improving the rate capability of the battery. The lattice change rate can be determined by methods known in the art, such as X-ray diffraction (XRD) patterns.

In some embodiments, a Li/Mn anti-site defect concentration of the second positive electrode active material is 5.3% or less, optionally 5.1% or less, more optionally 4% or less, further optionally 2.2% or less, further more optionally 2% or less, and still further more optionally 1.5%-2.2% or 0.5% or less.

The Li/Mn anti-site defect refers to the position exchange between Li⁺ and Mn²⁺ in the LiMnPO₄ lattice. The Li/Mn anti-site defect concentration refers to a percentage of Li⁺ exchanged with Mn²⁺ in the second positive electrode active material with respect to the total amount of Li⁺. The Mn²⁺ in the anti-site defect can hinder the transport of Li⁺. By reducing the Li/Mn anti-site defect concentration, the improvement of the specific capacity and rate capability of the second positive electrode active material is facilitated. The Li/Mn anti-site defect concentration can be determined by methods known in the art, such as XRD.

In some embodiments, a surface oxygen valence state of the second positive electrode active material is -1.55 or less, optionally -1.82 or less, more optionally -1.88 or less, further optionally -1.90 or less, further more optionally -1.98 to -1.88, still further more optionally - 1.98 to -1.89, and yet still further more optionally -1.98 to -1.90.

By reducing the surface oxygen valence state, the interface side reactions between the second positive electrode active material and the electrolytic solution can be reduced, thereby improving the cycle performance and high-temperature stability of the battery. The surface oxygen valence state can be determined by methods known in the art, such as electron energy loss spectroscopy (EELS).

In some embodiments, the second positive electrode active material includes a compound represented by formula (III).

Liₘ₂A³ₓ₂Fe_{1-y2}B³_{y2}P_{1-z2}C³_{z2}O₄₋ₙ₂D³ₙ₂ (III)

A³ includes one or more elements selected from Group IA, Group IIA, Group IIIA, Group IIB, Group VB, and Group VIB; B³ includes one or more elements selected from Group IA, Group IIA, Group IIIA, Group IVA, Group VA, Group IIB, Group IVB, Group VB, Group VIB, and Group VIII; C³ includes one or more elements selected from Group IIIA, Group IVA, Group VA, and Group VIA; D³ includes one or more elements selected from Group VIA and Group VIIA; m2 is selected from a range of 0.85 to 1.15; x2 is selected from a range of 0 to 0.1; y2 is selected from a range of 0 to 0.5; z2 is selected from a range of 0 to 0.5; n2 is selected from a range of 0 to 0.5.

In some embodiments, A³ includes one or more elements selected from Rb, Cs, Be, Ca, Sr, Ba, Ga, In, Cd, V, Ta, Cr, Zn, Al, Na, K, Mg, Nb, Mo, and W, and optionally one or more elements selected from Zn, Al, Na, K, Mg, Nb, Mo, and W.

In some embodiments, B³ includes one or more elements selected from Rb, Cs, Be, Ca, Sr, Ba, In, Pb, Bi, Cd, Hf, Ta, Cr, Ru, Rh, Pd, Os, Ir, Pt, Zn, Al, Na, K, Mg, Mo, W, Ti, V, Zr, Ni, Co, Ga, Sn, Sb, Nb, and Ge, and optionally one or more elements selected from Zn, Al, Na, K, Mg, Mo, W, Ti, V, Zr, Ni, Co, Ga, Sn, Sb, Nb, and Ge.

In some embodiments, C³ includes one or more elements selected from B, S, Si, and N.

In some embodiments, D³ includes one or more elements selected from S, F, Cl, and Br.

In some embodiments, m2 is selected from a range of 0.9 to 1.1, and optionally from a range of 0.97 to 1.01.

In some embodiments, x2 is selected from a range of 0.001 to 0.005.

In some embodiments, y2 is selected from a range of 0.001 to 0.2, and optionally from a range of 0.005 to 0.1.

In some embodiments, z2 is selected from a range of 0.001 to 0.1, and more optionally from a range of 0.001 to 0.005.

In some embodiments, n2 is selected from a range of 0 to 0.1, and more optionally from a range of 0.001 to 0.005.

The compound represented by formula (III) is obtained by element doping in lithium iron phosphate LiFePO₄, and A³, B³, C³, and D³ are elements doped at the Li site, Fe site, P site, and O site of LiFePO₄, respectively.

In some embodiments, the second positive electrode active material includes a second core and a second shell coating the second core. The second core includes the compound represented by formula (III) described above; the second shell includes one or more coating layers, and each of the coating layers has ionic conductivity and/or electronic conductivity.

The second shell coating the compound represented by formula (III) described above is the same as the second shell coating the compound represented by formula (III) described above, and the details will not be repeated herein.

The first positive electrode active material and the second positive electrode active material may be subjected to element content detection by inductively coupled plasma emission spectroscopy (ICP).

The first positive electrode active material and the second positive electrode active material may be prepared by the sintering method. When the first positive electrode active material and the second positive electrode active material have shells, the shell of each of the first positive electrode active material and the second positive electrode active material may be prepared by the liquid-phase coating method.

The positive electrode current collector has two surfaces opposite to each other in its own thickness direction, and the positive electrode film layer is disposed on any one or both of the two opposite surfaces of the positive electrode current collector.

In some embodiments, a total content of the positive electrode active material in the positive electrode film layer is 50 wt% to 99.5 wt%, optionally 90 wt% to 99.5 wt% or 95 wt% to 99.5 wt%, based on the total weight of the positive electrode film layer.

In some embodiments, a metal foil or a composite current collector may be used as the positive electrode current collector. For example, as the metal foil, an aluminum foil may be used. The composite current collector may include a polymer material substrate and a metal layer formed on at least one surface of the polymer material substrate. The composite current collector can be formed by forming a metal material (aluminum, aluminum alloy, nickel, nickel alloy, titanium, titanium alloy, silver, silver alloy, etc.) on a polymer material substrate (such as polypropylene (PP), polyethylene terephthalate (PET), polybutylene terephthalate (PBT), polystyrene (PS), and polyethylene (PE)).

In some embodiments, the positive electrode film layer further optionally includes a positive electrode binder. As an example, the positive electrode binder may include one or more of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorinated acrylic resin.

In some embodiments, the positive electrode film layer further optionally includes a positive electrode conductive agent. As an example, the positive electrode conductive agent may include one or more of superconducting carbon, acetylene black, carbon black, Ketjen black, a carbon dot, a carbon nanotube, graphene, and a carbon nanofiber.

In some embodiments, the positive electrode plate can be prepared in the following manner: dispersing the components described above for preparing the positive electrode plate, e.g., the first positive electrode active material, the second positive electrode active material, the positive electrode conductive agent, the positive electrode binder, and any other components, in a solvent (e.g., N-methylpyrrolidone) to form a positive electrode slurry; and applying the positive electrode slurry to the positive electrode current collector, and performing drying, cold pressing, and other processes to obtain the positive electrode plate.

In some embodiments, the negative electrode plate includes a negative electrode current collector and a negative electrode film layer disposed on at least one surface of the negative electrode current collector. The negative electrode film layer includes a negative electrode active material.

As an example, the negative electrode current collector has two surfaces opposite to each other in its own thickness direction, and the negative electrode film layer is disposed on any one or both of the two opposite surfaces of the negative electrode current collector.

In some embodiments, a metal foil or a composite current collector may be used as the negative electrode current collector. For example, as the metal foil, a copper foil may be used. The composite current collector may include a polymer material substrate and a metal layer formed on at least one surface of the polymer material substrate. The composite current collector can be formed by forming a metal material (such as copper, copper alloy, nickel, nickel alloy, titanium, titanium alloy, silver, and silver alloy) on a polymer material substrate (such as polypropylene (PP), polyethylene terephthalate (PET), polybutylene terephthalate (PBT), polystyrene (PS), and polyethylene (PE)).

In some embodiments, a material known in the art may be used as the negative electrode active material. As an example, the negative electrode active material may include one or more of the following materials: artificial graphite, natural graphite, soft carbon, hard carbon, a silicon-based material, a tin-based material, lithium titanate, and the like. The silicon-based material may include one or more of elemental silicon, a silicon-oxygen compound, a silicon-carbon composite, a silicon-nitrogen composite, and a silicon alloy. The tin-based material may include one or more of elemental tin, a tin-oxygen compound, and a tin alloy. However, the present application is not limited to these materials, and other conventional materials that can be used as negative electrode active materials may also be used. These negative electrode active materials may be used alone or in combination of two or more.

In some embodiments, the negative electrode film layer further optionally includes a negative electrode binder. As an example, the negative electrode binder may include one or more of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally includes a negative electrode conductive agent. As an example, the negative electrode conductive agent may include one or more of superconducting carbon, acetylene black, carbon black, Ketjen black, a carbon dot, a carbon nanotube, graphene, and a carbon nanofiber.

In some embodiments, the negative electrode film layer further optionally includes other auxiliary agents, e.g., a thickener (such as sodium carboxymethylcellulose (CMC)), etc.

In some embodiments, the negative electrode plate can be prepared in the following manner: dispersing the components described above for preparing the negative electrode plate, e.g., the negative electrode active material, the negative electrode conductive agent, the negative electrode binder, and any other components, in a solvent (e.g., deionized water) to form a negative electrode slurry; and applying the negative electrode slurry to the negative electrode current collector, and performing drying, cold pressing, and other processes to obtain the negative electrode plate.

In some embodiments, the negative electrode plate may also not include a negative electrode active material that enables the deintercalation of lithium ions. For example, the negative electrode plate may include a lithium foil or a lithium alloy foil; or, the negative electrode plate may include a mesh-like or foam-like three-dimensional skeleton layer; or, the negative electrode plate may include a negative electrode current collector and a lithium-containing layer disposed on at least one surface of the negative electrode current collector.

The present application does not particularly limit the type of the separator, and any porous-structure separator known to have good chemical stability and mechanical stability may be selected and used. In some embodiments, the separator includes a porous substrate. The porous substrate may be made of a material including one or more of glass fiber, non-woven fabric, polyethylene, polypropylene, polyvinylidene difluoride, polytetrafluoroethylene, polyester, and polyimide. The porous substrate may be a single-layer film or a multi-layer composite film, which is not particularly limited. When the porous substrate is a multi-layer composite film, the materials of the layers may be the same or different, which are not particularly limited.

In some embodiments, the separator may further include a coating on at least one surface of the porous substrate. Optionally, the coating includes one or more of inorganic heat-resistant particles and organic heat-resistant particles.

### Preparation Method

The embodiments of the present application also provide a method for preparing the battery cell described above.

The method includes the following steps: providing a battery container containing a positive electrode plate and a negative electrode plate, where the positive electrode plate includes a positive electrode current collector and a positive electrode film layer disposed on at least one surface of the positive electrode current collector, the positive electrode film layer includes a positive electrode active material, the positive electrode active material includes a first positive electrode active material and a second positive electrode active material, the first positive electrode active material and the second positive electrode active material enable deintercalation and intercalation of lithium ions, a crystal form of the first positive electrode active material is different from that of the second positive electrode active material, the second positive electrode active material is provided with a one-dimensional ion transport channel, and an ionic conductivity of the first positive electrode active material is greater than that of the second positive electrode active material; uniformly mixing a non-aqueous solvent and an electrolyte salt to obtain an electrolytic solution, where the electrolyte salt includes a lithium salt and a metal Me salt, the lithium salt dissociates into lithium ions and first anions in the electrolytic solution, the metal Me salt dissociates into Me cations and second anions in the electrolytic solution, an ionic radius of the Me cations is greater than that of the lithium ions, a weight content of the lithium ions in the electrolytic solution is denoted as w₁, and a weight content of the Me cations in the electrolytic solution is denoted as w₂, both based on the total weight of the electrolytic solution; and injecting the obtained electrolytic solution into the battery container to obtain a battery cell.

The method provided in the embodiments of the present application can be used for preparing the battery cell described above. Other parameters of the battery cell can refer to the battery cell described above in the present application, and the details will not be repeated herein.

In some embodiments, the battery container further includes a separator.

In some embodiments, the method may further include the following steps: preparing the positive electrode plate, the separator, and the negative electrode plate into an electrode assembly by a winding process and/or a stacking process, and placing the electrode assembly into the battery container.

The battery container may be an outer packaging. The outer packaging may be a hard shell, such as a hard plastic shell, an aluminum shell, or a steel shell. The outer packaging may also be a soft pack, such as a pouch-type soft pack. The soft pack may be made of plastic, such as one or more of polypropylene (PP), polybutylene terephthalate (PBT), and polybutylene succinate (PBS).

In some embodiments, after the obtained electrolytic solution is injected into the battery container, standing, formation, aging, capacity test, and other processes may also be performed to obtain a battery cell.

A plurality of battery cells may be further connected in series or in parallel or in series-parallel to form a battery module. A plurality of battery modules may also be connected in series or in parallel or in series-parallel to form a battery pack. In some embodiments, a plurality of battery cells may also directly constitute a battery pack.

The embodiments of the present application further provide an electric device, which includes the battery provided in the embodiments of the present application. The battery may be used as a power source for the electric device, or as an energy storage unit for the electric device. The electric device may be, but is not limited to, a mobile device (e.g., a mobile phone, a tablet computer, or a notebook computer), an electric vehicle (e.g., a pure electric vehicle, a hybrid electric vehicle, a plug-in hybrid electric vehicle, an electric bicycle, an electric scooter, an electric golf cart, or an electric truck), an electric train, ship, or satellite, an energy storage system, or the like.

The type of the battery, e.g., a battery cell, a battery module, or a battery pack, may be selected for the electric device according to its usage requirements.

FIG. 6 is a schematic diagram of an electric device as one example. The electric device is a pure electric vehicle, a hybrid electric vehicle, a plug-in hybrid electric vehicle, or the like. To satisfy the requirements of the electric device for high power and high energy density of the battery, the battery pack or the battery module may be used.

As another example, the electric device may be a mobile phone, a tablet computer, a notebook computer, or the like. The electric device is generally required to be light and thin, and a battery cell can thus be used as the power source.

### Examples

The following examples more specifically describe the content disclosed in the present application. These examples are intended for illustrative purposes only, since various modifications and changes within the scope of the content disclosed in the present application will be apparent to those skilled in the art. Unless otherwise stated, all parts, percentages, and ratios reported in the following examples are based on weight. All reagents used in the examples are commercially available or synthesized according to conventional methods and can be used directly without further treatment, and all the instruments used in the examples are commercially available.

**Examples 1-25 and Comparative Examples 1-3 were all prepared according to the following method.**

### Preparation of positive electrode plate

The positive electrode active material shown in Table 1, a positive electrode conductive agent carbon black, and a positive electrode binder polyvinylidene fluoride (PVDF) were uniformly mixed under stirring in a proper amount of solvent NMP according to a weight ratio of 90:5:5 to form a uniform positive electrode slurry. The positive electrode slurry was uniformly applied to the surface of a positive electrode current collector aluminum foil, and drying and cold pressing were performed to obtain the positive electrode plate.

The positive electrode active material includes a first positive electrode active material and a second positive electrode active material. In Table 1, the weight contents of the first positive electrode active material and the second positive electrode active material are both based on the total weight of the positive electrode active material.

### Preparation of negative electrode plate

A negative electrode active material graphite, a negative electrode binder styrene-butadiene rubber (SBR), a negative electrode thickener sodium carboxymethylcellulose (CMC-Na), and a negative electrode conductive agent carbon black (Super P) were uniformly mixed under stirring in a proper amount of solvent deionized water according to a weight ratio of 90:3:2:5 to form a uniform negative electrode slurry. The negative electrode slurry was uniformly applied to the surface of the negative electrode current collector copper foil, and drying and cold pressing were performed to obtain the negative electrode plate.

### Separator

A porous polyethylene (PE) film was used as the separator.

### Preparation of Electrolytic solution

Ethylene carbonate (EC), diethyl carbonate (DEC), and dimethyl carbonate (DMC) were mixed according to a volume ratio of 1:1:1 to obtain a non-aqueous solvent. Then, the lithium salt and the metal Me salt shown in Table 1 were dissolved in the above non-aqueous solvent, followed by the addition of FEC to prepare an electrolytic solution. The total concentration of the electrolyte salt is 1 mol/L, and the content of FEC is 5 % based on the total weight of the electrolytic solution.

In Table 1, w₂/(w₁ + w₂) represents the mass ratio of Me cations to the mixture of lithium ions and Me cations.

### Preparation of battery

The positive electrode plate, the separator, and the negative electrode plate were made into an electrode assembly according to a Z-shaped stacked structure, and then the electrode assembly was dried in vacuum at 90 °C for 12 h. Subsequently, tabs (an aluminum tab was used for the positive electrode plate, a nickel tab was used for the negative electrode, and the positive electrode tab and the negative electrode tab were located at the same end of the electrode assembly) were welded, the electrode assembly with the welded tabs was placed into an aluminum-plastic film with a proper size for top and side sealing, and then liquid injection, standing, formation, aging, exhaust, secondary sealing, capacity test, and other processes were performed to obtain the battery.

### Test Section

### (1) Chemical molar ratio test of Ni to Co in first positive electrode active material

About 0.4 g (accurate to 0.0001 g) of the first positive electrode active material was taken and added to a 25 mL beaker, followed by the addition of 2-5 mL of nitric acid, and the beaker was left to stand overnight. Then, the beaker was placed on an electric hot plate, and heated at about 100 °C (the temperature could be controlled by adjusting the input voltage with a voltage regulating transformer) until the first positive electrode active material was digested. Then, 0.5 mL of perchloric acid was added, and the mixture was heated for digestion at about 140 °C until all the white fumes had dissipated. The residue should have been white; otherwise, nitric acid and perchloric acid should have been added to repeat the digestion process. Finally, the residue was dissolved with 7% (referring to the volume percentage of the acid) hydrochloric acid to extract a solution, then the obtained solution was made up to a proper volume and tested using an inductively coupled plasma optical emission spectrometer (ICP-OES), and the chemical molar ratio of Ni to Co in the first positive electrode active material was calculated.

### (2) Q₂/Q₁ test

At a constant temperature of 25 °C, the prepared battery above was charged at a constant current of 0.5 C to 4.4 V, then charged at a constant voltage of 4.4 V to a current of ≤ 0.05 C, and left to stand for 5 min. Subsequently, the battery was discharged at a constant current of 0.33 C to 2.5 V to obtain a total discharge capacity Q₁. The total discharge capacity at 3.6 V or less on a discharge curve was denoted as Q₂.

### (3) 25 °C cycle performance test

At a constant temperature of 25 °C, the prepared battery above was charged at a constant current of 0.5 C to 4.4 V, then charged at a constant voltage of 4.4 V to a current of ≤ 0.05 C, and left to stand for 5 min. Subsequently, the battery was discharged at a constant current of 1 C to 2.5 V. This was one charge-discharge cycle. The discharge capacity at this time was recorded, which was the discharge capacity of the first cycle. The battery was subjected to a cyclic charge-discharge test according to the above method, and the discharge capacity after each cycle was recorded until the discharge capacity of the battery decreased to 80% of the discharge capacity of the first cycle. The number of cycles at this time was used to characterize the cycle performance of the battery. The higher the number of cycles of the battery, the better the cycle performance.

### (4) Internal resistance increase rate test of battery after 500 cycles

At a constant temperature of 25 °C, the prepared battery above was charged at a constant current of 0.5 C to 4.4 V, then charged at a constant voltage of 4.4 V to a current of ≤ 0.05 C, and left to stand for 30 min. At this time, the voltage of the battery was denoted as V₁. The battery was discharged at a constant current of 1 C for 30 s, and the voltage at the end of discharge was denoted as V₂. The internal resistance DCR of the battery before cycle was recorded. DCR = (V₁ - V₂)/1C.

The battery was subjected to 500 cycles according to the above cycle performance test method. The internal resistance DCR of the battery after 500 cycles was tested according to the above method.

The internal resistance increase rate of the battery after 500 cycles = (internal resistance after 500 cycles/internal resistance before cycle) - 1.

The test results are shown in Table 1.

FIG. 7 is a discharge curve of the battery prepared in Example 2. As can be seen from FIG. 2, the Q₂/Q₁ of the battery prepared in Example 2 is 0.34.

It can be seen from the test results of Table 1 that by incorporating a metal Me salt with an ionic radius of cations greater than that of lithium ions into the electrolytic solution and allowing the battery to satisfy a condition of 0.8 ≤ (Q₂/Q₁)/[w₂/(w₁ + w₂)] ≤ 8.5, the battery can have a relatively low internal resistance growth rate and a relatively long cycle life.

It should be noted that the present application is not limited to the embodiments described above. The embodiments described above are merely examples, and any embodiments having a structure substantially identical to the technical concept and exerting the same functional effects within the scope of the technical solutions of the present application are all included within the technical scope of the present application. Furthermore, without departing from the spirit of the present application, various modifications that can be conceived by those skilled in the art to the embodiments, as well as other embodiments formed by combining some of the constituent elements of the embodiments, are also included within the scope of the present application.

**Table 1**

| No. | First positive electrode active material | | Second positive electrode active material | | | Lithium salt | Metal Me salt | Q₂/Q₁ | w₂/ (w₁+w₂) | (Q₂/Q₁)/ [w₂/(w₁+w₂)] | Number of cycles at 25 °C | Internal resistance increase rate after 500 cycles |
|---|---|---|---|---|---|---|---|---|---|---|---|---|
| | Type | Weight content | Type | Weight content | Specific surface area/m²/g | | | | | | | |
| Comparative Example 1 | LiNi_{0.55}Co_{0.07}Mn_{0.38}O₂ | 70% | LiMn_{0.6}Fe_{0.4}PO₄/C | 30% | 12 | LiPF₆ | NaPF₆ | 0.34 | 0 | / | 731 | 75% |
| Comparative Example 2 | LiNi_{0.55}Co_{0.07}Mn_{0.38}O₂ | 70% | LiMn_{0.6}Fe_{0.4}PO₄/C | 30% | 12 | LiPF₆ | NaPF₆ | 0.34 | 0.02 | 17.00 | 792 | 69% |
| Comparative Example 3 | LiNi_{0.55}Co_{0.07}Mn_{0.38}O₂ | 70% | LiMn_{0.6}Fe_{0.4}PO₄/C | 30% | 12 | LiPF₆ | NaPF₆ | 0.34 | 0.45 | 0.76 | 584 | 62% |
| Example 1 | LiNi_{0.55}Co_{0.07}Mn_{0.38}O₂ | 90% | LiMn_{0.6}Fe_{0.4}PO₄/C | 10% | 12 | LiPF₆ | NaPF₆ | 0.31 | 0.10 | 3.10 | 1537 | 26% |
| Example 2 | LiNi_{0.55}Co_{0.07}Mn_{0.38}O₂ | 70% | LiMn_{0.6}Fe_{0.4}PO₄/C | 30% | 12 | LiPF₆ | NaPF₆ | 0.34 | 0.10 | 3.40 | 1513 | 30% |
| Example 3 | LiNi_{0.55}Co_{0.07}Mn_{0.38}O₂ | 30% | LiMn_{0.6}Fe_{0.4}PO₄/C | 70% | 12 | LiPF₆ | NaPF₆ | 0.39 | 0.10 | 3.90 | 1324 | 37% |
| Example 4 | LiNi_{0.55}Co_{0.07}Mn_{0.38}O₂ | 10% | LiMn_{0.6}Fe_{0.4}PO₄/C | 90% | 12 | LiPF₆ | NaPF₆ | 0.42 | 0.10 | 4.20 | 1121 | 40% |
| Example 5 | LiNi_{0.55}Co_{0.07}Mn_{0.38}O₂ | 70% | LiMn_{0.6}Fe_{0.4}PO₄/C | 30% | 12 | LiPF₆ | NaPF₆ | 0.34 | 0.04 | 8.50 | 972 | 50% |
| Example 6 | LiNi_{0.55}Co_{0.07}Mn_{0.38}O₂ | 70% | LiMn_{0.6}Fe_{0.4}PO₄/C | 30% | 12 | LiPF₆ | NaPF₆ | 0.34 | 0.05 | 6.80 | 1478 | 45% |
| Example 7 | LiNi_{0.55}Co_{0.07}Mn_{0.38}O₂ | 70% | LiMn_{0.6}Fe_{0.4}PO₄/C | 30% | 12 | LiPF₆ | NaPF₆ | 0.34 | 0.20 | 1.70 | 1238 | 28% |
| Example 8 | LiNi_{0.55}Co_{0.07}Mn_{0.38}O₂ | 70% | LiMn_{0.6}Fe_{0.4}PO₄/C | 30% | 12 | LiPF₆ | NaPF₆ | 0.34 | 0.30 | 1.13 | 883 | 34% |
| Example 9 | LiNi_{0.55}Co_{0.07}Mn_{0.38}O₂ | 70% | LiMn_{0.6}Fe_{0.4}PO₄/C | 30% | 12 | LiPF₆ | NaPF₆ | 0.34 | 0.35 | 0.97 | 812 | 47% |
| Example 10 | LiNi_{0.55}Co_{0.07}Mn_{0.38}O₂ | 23% | LiMn_{0.6}Fe_{0.4}PO₄/C | 77% | 12 | LiPF₆ | NaPF₆ | 0.40 | 0.05 | 8.00 | 1203 | 42% |
| Example 11 | LiNi_{0.55}Co_{0.07}Mn_{0.38}O₂ | 70% | LiMn_{0.6}Fe_{0.4}PO₄/C | 30% | 8 | LiPF₆ | NaPF₆ | 0.34 | 0.10 | 3.40 | 916 | 57% |
| Example 12 | LiNi_{0.55}Co_{0.07}Mn_{0.38}O₂ | 70% | LiMn_{0.6}Fe_{0.4}PO₄/C | 30% | 10 | LiPF₆ | NaPF₆ | 0.34 | 0.10 | 3.40 | 1463 | 33% |
| Example 13 | LiNi_{0.55}Co_{0.07}Mn_{0.38}O₂ | 70% | LiMn_{0.6}Fe_{0.4}PO₄/C | 30% | 14.4 | LiPF₆ | NaPF₆ | 0.34 | 0.10 | 3.40 | 1487 | 27% |
| Example 14 | LiNi_{0.55}Co_{0.07}Mn_{0.38}O₂ | 70% | LiMn_{0.6}Fe_{0.4}PO₄/C | 30% | 16 | LiPF₆ | NaPF₆ | 0.34 | 0.10 | 3.40 | 1353 | 31% |
| Example 15 | LiNi_{0.55}Co_{0.07}Mn_{0.38}O₂ | 70% | LiMn_{0.6}Fe_{0.4}PO₄/C | 30% | 20 | LiPF₆ | NaPF₆ | 0.34 | 0.10 | 3.40 | 1285 | 47% |
| Example 16 | LiNi_{0.55}Co_{0.07}Mn_{0.38}O₂ | 70% | LiMn_{0.6}Fe_{0.4}PO₄/C | 30% | 22 | LiPF₆ | NaPF₆ | 0.34 | 0.10 | 3.40 | 843 | 58% |
| Example 17 | LiNi_{0.55}Co_{0.07}Mn_{0.38}O₂ | 70% | LiMn_{0.6}Fe_{0.4}PO₄/C | 30% | 12 | LiPF₆ | NaBF₄ | 0.34 | 0.10 | 3.40 | 1427 | 32% |
| Example 18 | LiNi_{0.55}Co_{0.07}Mn_{0.38}O₂ | 70% | LiMn_{0.6}Fe_{0.4}PO₄/C | 30% | 12 | LiPF₆ | NaClO₄ | 0.34 | 0.10 | 3.40 | 1352 | 31% |
| Example 19 | LiNi_{0.35}Co_{0.2}Mn_{0.45}O₂ | 70% | LiMn_{0.6}Fe_{0.4}PO₄/C | 30% | 12 | LiPF₆ | NaPF₆ | 0.34 | 0.10 | 3.40 | 1235 | 27% |
| Example 20 | LiNi_{0.55}Co_{0.07}Mn_{0.38}O₂ | 70% | LiFePO₄/C | 30% | 9 | LiPF₆ | NaPF₆ | 0.31 | 0.10 | 3.10 | 1726 | 25% |
| Example 21 | LiNi_{0.55}Co_{0.07}Mn_{0.38}O₂ | 70% | Li_{0.988}Mg_{0.005}Mn_{0.60}Fe_{0.35}V_{0.05}P_{0.999}S_{0.001}O_{3.999}F_{0.001}/C | 30% | 13 | LiPF₆ | NaPF₆ | 0.32 | 0.10 | 3.20 | 1656 | 29% |
| Example 22 | LiNi_{0.55}Co_{0.07}Mn_{0.38}O₂ | 70% | Li_{0.984}Mg_{0.005}Mn_{0.60}Fe_{0.25}V_{0.05}Co_{0.10}P_{0.999}S_{0.001}O_{3.995}F_{0.005}/C | 30% | 13 | LiPF₆ | NaPF₆ | 0.29 | 0.10 | 2.90 | 1701 | 27% |
| Example 23 | LiNi_{0.55}Co_{0.07}Mn_{0.38}O₂ | 70% | Li_{0.999}Mn_{0.60}Fe_{0.40}P_{0.999}S_{0.001}O₄/C | 30% | 13 | LiPF₆ | NaPF₆ | 0.34 | 0.10 | 3.40 | 1588 | 30% |
| Example 24 | LiNi_{0.55}Co_{0.07}Mn_{0.38}O₂ | 70% | Li_{0 999}Mn_{0.60}Fe_{0.393}V_{0.007}P_{0.999}S_{0.001}O₄/C | 30% | 13 | LiPF₆ | NaPF₆ | 0.33 | 0.10 | 3.30 | 1627 | 29% |
| Example 25 | LiNi_{0.55}Co_{0.07}Mn_{0.38}O₂ | 70% | Li_{0.999}Mn_{0.60}Fe_{0.393}V_{0.004}Co_{0.003}P_{0.999}S_{0.001}O₄/C | 30% | 13 | LiPF₆ | NaPF₆ | 0.33 | 0.10 | 3.30 | 1674 | 28% |

## Claims

1. A battery cell, comprising a positive electrode plate and an electrolytic solution, wherein,
the positive electrode plate comprises a positive electrode current collector and a positive electrode film layer disposed on at least one surface of the positive electrode current collector, the positive electrode film layer comprises a positive electrode active material, the positive electrode active material comprises a first positive electrode active material and a second positive electrode active material, the first positive electrode active material and the second positive electrode active material enable deintercalation and intercalation of lithium ions, crystal forms of the first positive electrode active material and the second positive electrode active material are different, the second positive electrode active material is provided with a one-dimensional ion transport channel, and an ionic conductivity of the first positive electrode active material is greater than that of the second positive electrode active material;
the electrolytic solution comprises a non-aqueous solvent and an electrolyte salt, the electrolyte salt comprises a lithium salt and a metal Me salt, the lithium salt dissociates into lithium ions and first anions in the electrolytic solution, the metal Me salt dissociates into Me cations and second anions in the electrolytic solution, an ionic radius of the Me cations is greater than that of the lithium ions, a weight content of the lithium ions in the electrolytic solution is denoted as w₁, and a weight content of the Me cations in the electrolytic solution is denoted as w₂, both based on a total weight of the electrolytic solution;
in a charge-discharge test of the battery cell, a total discharge capacity of the battery cell is denoted as Q₁, and a discharge capacity of the battery cell at a discharge voltage of 3.6 V or less is denoted as Q₂, both with a unit of mAh;
the battery cell, when in a state where the remaining capacity is greater than 90%, satisfies a condition of 0.8 ≤ (Q₂/Q₁)/[w₂/(w₁ + w₂)] ≤ 8.5;
the charge-discharge test of the battery cell is performed under the following conditions: at a test temperature of 25 °C, the battery cell is fully charged at 0.5 C, left to stand for 5 min, and then fully discharged at 0.33 C.

2. The battery cell according to claim 1, wherein,
1.1 ≤ (Q₂/Q₁)/[w₂/(w₁ + w₂)] ≤ 6.8, and optionally, 1.7 ≤ (Q₂/Q₁)/[w₂/(w₁ + w₂)] ≤ 3.9.

3. The battery cell according to claim 1 or 2, wherein,
0.29 ≤ Q₂/Q₁ ≤ 0.42, and optionally, 0.31 ≤ Q₂/Q₁ ≤ 0.40; and/or,
0.05 ≤ w₂/(w₁ + w₂) ≤ 0.35, and optionally, 0.05 ≤ w₂/(w₁ + w₂) ≤ 0.30.

4. The battery cell according to any one of claims 1-3, wherein,
the Me element comprises one or more of an alkali metal element and an alkaline earth metal element,
optionally, the alkali metal element comprises one or more of Na and K; and/or,
optionally, the alkaline earth metal element comprises one or more of Ca and Mg.

5. The battery cell according to any one of claims 1-4, wherein,
the first anions comprise one or more of PF₆⁻, ClO₄⁻, AsF₆⁻, BF₄⁻, N(CF₃SO₂)₂⁻, CF₃SO₃⁻, N(FSO₂)₂⁻, C(SO₂CF₃)₃⁻, PO₂F₂⁻, a difluoro(oxalato)borate ion, a bis(oxalato)borate ion, a difluorobis(oxalato)phosphate ion, and a tetrafluoro(oxalato)phosphate ion; and/or,
the second anions comprise one or more of PF₆⁻, ClO₄⁻, AsF₆⁻, BF₄⁻, N(CF₃SO₂)₂⁻, CF₃SO₃⁻, N(FSO₂)₂⁻, C(SO₂CF₃)₃⁻, PO₂F₂⁻, a difluoro(oxalato)borate ion, a bis(oxalato)borate ion, a difluorobis(oxalato)phosphate ion, and a tetrafluoro(oxalato)phosphate ion.

6. The battery cell according to any one of claims 1-5, wherein the first anions are the same as the second anions.

7. The battery cell according to any one of claims 1-6, wherein,
a weight proportion W₁ of the first positive electrode active material is 10%-90%, and optionally 70%-90%, based on a total weight of the positive electrode active material; and/or,
a weight proportion W₂ of the second positive electrode active material is 10%-90%, and optionally 10%-30%, based on the total weight of the positive electrode active material; and/or,
a specific surface area of the first positive electrode active material is 0.5 m²/g to 1 m²/g, and optionally 0.6 m²/g to 0.9 m²/g; and/or,
a specific surface area of the second positive electrode active material is 10 m²/g to 20 m²/g, and optionally 12 m²/g to 16 m²/g.

8. The battery cell according to any one of claims 1-7, wherein,
the first positive electrode active material comprises a lithium-containing layered oxide;
optionally, the first positive electrode active material comprises a compound represented by formula (I),
LiₐA¹_{b}Ni_{c}Co_{d}B¹ₑC¹_{f}O_{g}D¹ₕ (I),
wherein A¹ comprises one or more elements selected from Group IA, Group IIA, Group VIII, Group VIB, and Group IIB, and optionally one or more elements selected from Na, K, Mg, Rb, Zn, and Zr;
B¹ comprises selected from Mn and/or Al;
C¹ comprises one or more elements selected from Group IA, Group IIA, Group IIIA, Group IVA, Group VA, Group VIA, Group IB, Group IIB, Group IIIB, Group IVB, Group VB, Group VIB, and Group VIII, and optionally one or more elements selected from Al, Mg, Ca, Na, Ti, W, Zr, Sr, Cr, Fe, Zn, Cu, Ba, Mo, V, Ce, Nb, Sb, Ta, Ge, Nb, Sc, Ba, B, S, and Y, and more optionally one or more elements selected from Mg, Ti, W, Zr, Cr, Fe, Zn, Cu, V, Nb, Sr, Sb, and Y;
D¹ comprises one or more elements selected from Group VIA and Group VIIA, optionally one or more elements selected from N, S, F, Cl, and Br, and more optionally S and/or F;
a is selected from a range of 0.75 to 1.2, and optionally from a range of 0.9 to 1.1;
b is selected from a range of 0 to 0.2, and optionally from a range of 0 to 0.1;
c is selected from a range of 0.001 to 0.990, and optionally from a range of 0.500 to 0.990;
d is selected from a range of 0 to 0.990, and optionally from a range of 0 to 0.100;
e is selected from a range of 0.001 to 0.990, and optionally from a range of 0.005 to 0.450;
f is selected from a range of 0 to 0.1, and optionally from a range of 0.001 to 0.05;
g is selected from a range of 1.0 to 2.0, and optionally from a range of 1.9 to 2.0;
h is selected from a range of 0 to 1.0, and optionally from a range of 0.01 to 0.1;
optionally, c + d + e + f = 1; and/or,
optionally, g + h = 2.

9. The battery cell according to claim 8, wherein the first positive electrode active material comprises a first core and a first shell coating the first core,
the first core comprises the compound represented by formula (I);
the first shell comprises one or more coating layers, and each of the coating layers has ionic conductivity and/or electronic conductivity;
optionally, the one or more coating layers each independently comprise one or more selected from a phosphate, a pyrophosphate, carbon, doped carbon, an oxide, and a fast-ionic conductor, and more optionally one or more selected from a phosphate, a pyrophosphate, and an oxide.

10. The battery cell according to claim 9, wherein,
a coating amount of the first shell is 0.005 wt% to 1 wt%, and optionally 0.01 wt% to 0.5 wt%, based on a weight of the first core; and/or,
a thickness of the first shell is 2 nm to 200 nm, and optionally 5 nm to 50 nm.

11. The battery cell according to any one of claims 1-10, wherein the second positive electrode active material comprises a lithium-containing phosphate,
optionally, the second positive electrode active material comprises a compound represented by formula (II),
Liₘ₁A²ₓ₁Mn_{1-y1}B²_{y1}P_{1-z1}C²_{z1}O₄₋ₙ₁D²ₙ₁ (II),
wherein A² comprises one or more elements selected from Group IA, Group IIA, Group IIIA, Group IIB, Group VB, and Group VIB, optionally one or more elements selected from Rb, Cs, Be, Ca, Sr, Ba, Ga, In, Cd, V, Ta, Cr, Zn, Al, Na, K, Mg, Nb, Mo, and W, and more optionally one or more elements selected from Zn, Al, Na, K, Mg, Nb, Mo, and W;
B² comprises one or more elements selected from Group IA, Group IIA, Group IIIA, Group IVA, Group VA, Group IIB, Group IVB, Group VB, Group VIB, and Group VIII, optionally one or more elements selected from Rb, Cs, Be, Ca, Sr, Ba, In, Pb, Bi, Cd, Hf, Ta, Cr, Ru, Rh, Pd, Os, Ir, Pt, Zn, Al, Na, K, Mg, Mo, W, Ti, V, Zr, Fe, Ni, Co, Ga, Sn, Sb, Nb, and Ge, and more optionally one or more elements selected from Zn, Al, Na, K, Mg, Mo, W, Ti, V, Zr, Fe, Ni, Co, Ga, Sn, Sb, Nb, and Ge;
C² comprises one or more elements selected from Group IIIA, Group IVA, Group VA, and Group VIA, and optionally one or more elements selected from B, S, Si, and N;
D² comprises one or more elements selected from Group VIA and Group VIIA, and optionally one or more elements selected from S, F, Cl, and Br;
m1 is selected from a range of 0.85 to 1.15, optionally from a range of 0.9 to 1.1, and more optionally from a range of 0.97 to 1.01;
x1 is selected from a range of 0 to 0.1, optionally from a range of 0.001 to 0.1, and more optionally from a range of 0.001 to 0.005;
y1 is selected from a range of 0.001 to 0.999, optionally from a range of 0.001 to 0.5, and more optionally from a range of 0.2 to 0.5;
z1 is selected from a range of 0 to 0.5, optionally from a range of 0.001 to 0.1, and more optionally from a range of 0.001 to 0.005;
n1 is selected from a range of 0 to 0.5, optionally from a range of 0 to 0.1, and more optionally from a range of 0.001 to 0.005.

12. The battery cell according to claim 11, wherein,
A² comprises any one element selected from Zn, Al, Na, K, Mg, Nb, Mo, and W, and optionally any one element selected from Mg and Nb; and/or,
B² comprises one or more elements selected from Ti, V, Zr, Fe, Ni, Mg, Co, Ga, Sn, Sb, Nb, and Ge, optionally at least two elements selected from Ti, V, Zr, Fe, Ni, Mg, Co, Ga, Sn, Sb, Nb, and Ge, more optionally at least two elements selected from Fe, Ti, V, Ni, Co, and Mg, further optionally at least two elements selected from Fe, Ti, V, Co, and Mg, and further more optionally Fe and one or more elements selected from Ti, V, Co, and Mg; and/or,
C² comprises any one element selected from B, S, Si, and N, and is optionally S; and/or,
D² comprises any one element selected from S, F, Cl, and Br, and is optionally F.

13. The battery cell according to any one of claims 11-12, wherein x1 is 0, z1 is 0, and n1 is 0; or, x1 is 0, z1 is selected from a range of 0.001 to 0.5, and n1 is selected from a range of 0.001 to 0.1; or, x1 is selected from a range of 0.001 to 0.1, z1 is 0, and n1 is selected from a range of 0.001 to 0.1; or, x1 is selected from a range of 0.001 to 0.1, z1 is selected from a range of 0.001 to 0.5, and n1 is 0; or, x1 is 0, z1 is 0, and n1 is selected from a range of 0.001 to 0.1; or, x1 is 0, z1 is selected from a range of 0.001 to 0.5, and n1 is 0; or, x1 is selected from a range of 0.001 to 0.1, z1 is selected from a range of 0.001 to 0.5, and n1 is selected from a range of 0.001 to 0.1.

14. The battery cell according to any one of claims 11-12, wherein,
y1:z1 is selected from a range of 0.002 to 999, optionally from a range of 0.025 to 999 or from a range of 0.002 to 500, and more optionally from a range of 0.2 to 600; and/or,
zl:nl is selected from a range of 0.002 to 500, optionally from a range of 0.2 to 100, and more optionally from a range of 0.2 to 50.

15. The battery cell according to any one of claims 11-14, wherein,
A² comprises one or more elements selected from Zn, Al, Na, K, Mg, Nb, Mo, and W; B² comprises one or more elements selected from Ti, V, Zr, Fe, Ni, Mg, Co, Ga, Sn, Sb, Nb, and Ge; C² comprises one or more elements selected from B, S, Si, and N; D² comprises one or more elements selected from S, F, Cl, and Br; m1 is selected from a range of 0.9 to 1.1, x1 is selected from a range of 0.001 to 0.1, y1 is selected from a range of 0.001 to 0.5, z1 is selected from a range of 0.001 to 0.1, and n1 is selected from a range of 0.001 to 0.1.

16. The battery cell according to any one of claims 11-14, wherein,
B² comprises one or more elements selected from Zn, Al, Na, K, Mg, Mo, W, Ti, V, Zr, Fe, Ni, Co, Ga, Sn, Sb, Nb, and Ge, and optionally one or more elements selected from Zn, Fe, Ti, V, Ni, Co, and Mg; C² comprises one or more elements selected from B, Si, N, and S; m1 is selected from a range of 0.9 to 1.1, x1 is 0, y1 is selected from a range of 0.001 to 0.5, z1 is selected from a range of 0.001 to 0.1, and n1 is 0.

17. The battery cell according to any one of claims 11-16, wherein,
(1-yl):yl is within a range of 0.1 to 999, optionally within a range of 0.1 to 10 or within a range of 0.67 to 999, more optionally within a range of 1 to 10, further optionally within a range of 1 to 4, and further more optionally within a range of 1.5 to 3; and/or,
a1:x1 is within a range of 1 to 1200, optionally within a range of 9 to 1100, and more optionally within a range of 190 to 998; and/or,
zl:(1-zl) is 1:9 to 1:999, and optionally 1:499 to 1:249.

18. The battery cell according to any one of claims 1-10, wherein the second positive electrode active material comprises a compound represented by formula (III),
Liₘ₂A³ₓ₂Fe_{1-y2}B³_{y2}P_{1-z2}C³_{z2}O₄₋ₙ₂D³ₙ₂ (III),
wherein A³ comprises one or more elements selected from Group IA, Group IIA, Group IIIA, Group IIB, Group VB, and Group VIB, optionally one or more elements selected from Rb, Cs, Be, Ca, Sr, Ba, Ga, In, Cd, V, Ta, Cr, Zn, Al, Na, K, Mg, Nb, Mo, and W, and more optionally one or more elements selected from Zn, Al, Na, K, Mg, Nb, Mo, and W;
B³ comprises one or more elements selected from Group IA, Group IIA, Group IIIA, Group IVA, Group VA, Group IIB, Group IVB, Group VB, Group VIB, and Group VIII, optionally one or more elements selected from Rb, Cs, Be, Ca, Sr, Ba, In, Pb, Bi, Cd, Hf, Ta, Cr, Ru, Rh, Pd, Os, Ir, Pt, Zn, Al, Na, K, Mg, Mo, W, Ti, V, Zr, Ni, Co, Ga, Sn, Sb, Nb, and Ge, and more optionally one or more elements selected from Zn, Al, Na, K, Mg, Mo, W, Ti, V, Zr, Ni, Co, Ga, Sn, Sb, Nb, and Ge;
C³ comprises one or more elements selected from Group IIIA, Group IVA, Group VA, and Group VIA, and optionally one or more elements selected from B, S, Si, and N;
D³ comprises one or more elements selected from Group VIA and Group VIIA, and optionally one or more elements selected from S, F, Cl, and Br;
m2 is selected from a range of 0.85 to 1.15, optionally from a range of 0.9 to 1.1, and more optionally from a range of 0.97 to 1.01;
x2 is selected from a range of 0 to 0.1, and optionally from a range of 0.001 to 0.005; y2 is selected from a range of 0 to 0.5, optionally from a range of 0.001 to 0.2, and more optionally from a range of 0.005 to 0.1;
z2 is selected from a range of 0 to 0.5, optionally from a range of 0.001 to 0.1, and more optionally from a range of 0.001 to 0.005;
n2 is selected from a range of 0 to 0.5, optionally from a range of 0 to 0.1, and more optionally from a range of 0.001 to 0.005.

19. The battery cell according to any one of claims 11-18, wherein the second positive electrode active material comprises a second core and a second shell coating the second core,
the second core comprises the compound represented by formula (II) or the compound represented by formula (III);
the second shell comprises one or more coating layers; each of the coating layers has ionic conductivity and/or electronic conductivity;
optionally, the one or more coating layers each independently comprise one or more selected from a pyrophosphate, a phosphate, carbon, doped carbon, an oxide, a boride, and a polymer.

20. The battery cell according to claim 19, wherein,
the second shell comprises one coating layer; optionally, the coating layer comprises one or more selected from a pyrophosphate, a phosphate, carbon, doped carbon, an oxide, a boride, and a polymer.

21. The battery cell according to claim 19, wherein,
the second shell comprises a first coating layer coating the second core and a second coating layer coating the first coating layer;
optionally, the first coating layer and the second coating layer each independently comprise one or more selected from a pyrophosphate, a phosphate, carbon, doped carbon, an oxide, a boride, and a polymer;
more optionally, the first coating layer comprises one or more selected from a pyrophosphate, a phosphate, an oxide, and a boride, and the second coating layer comprises one or more selected from carbon and doped carbon.

22. The battery cell according to claim 19, wherein,
the second shell comprises a first coating layer coating the second core, a second coating layer coating the first coating layer, and a third coating layer coating the second coating layer;
optionally, the first coating layer, the second coating layer, and the third coating layer each independently comprise one or more selected from a pyrophosphate, a phosphate, carbon, doped carbon, an oxide, a boride, and a polymer;
more optionally, the first coating layer comprises a pyrophosphate, the second coating layer comprises one or more selected from a phosphate, an oxide, and a boride, and the third coating layer comprises one or more selected from carbon and doped carbon.

23. The battery cell according to any one of claims 19-22, wherein,
the pyrophosphate is Mᵢ(P₂O₇)ⱼ; and/or,
the phosphate is Xₚ(PO₄)_{q}; and/or,
a doping element in the doped carbon comprises one or more selected from Group IIIA, Group VA, Group VIA, and Group VIIA; and/or,
the oxide is M'ₖOₗ; and/or,
the boride is ZᵥB_{w}; and/or,
the polymer comprises one or more selected from a polysaccharide and a derivative thereof, and a polysiloxane;
M, X, and Z each independently comprise one or more elements selected from Group IA, Group IIA, Group IIIA, Group IB, Group IIB, Group IVB, Group VB, Group VIIB, and Group VIII;
i is selected from a range of 1 to 4;
j is selected from a range of 1 to 6;
p is selected from a range of 1 to 2;
q is selected from a range of 1 to 4;
M' comprises one or more elements selected from alkali metals, alkaline earth metals, transition metals, Group IIIA elements, Group IVA elements, lanthanide elements, and Sb;
k is greater than 0 and less than or equal to 2;
l is greater than 0 and less than or equal to 5;
v is selected from a range of 1 to 7;
w is selected from a range of 1 to 2.

24. The battery cell according to claim 23, wherein,
M, X, and Z each independently comprise one or more elements selected from Li, Fe, Ni, Mg, Co, Cu, Zn, Ti, Ag, Zr, Nb, Mn, and Al; and/or,
the doping element in the doped carbon comprises one or more selected from nitrogen, phosphorus, sulfur, boron, and fluorine; and/or,
M' comprises one or more elements selected from Li, Be, B, Na, Mg, Al, Si, P, K, Ca, Sc, Ti, V, Cr, Mn, Fe, Co, Ni, Cu, Zn, Ga, Ge, As, Se, Sr, Y, Zr, Nb, Mo, Tc, Ru, Rh, Pd, Ag, Cd, In, Sn, Sb, Te, W, La, and Ce, optionally one or more elements selected from Mg, Al, Si, Zn, Zr, and Sn; and/or,
the polysiloxane is selected from one or more of a polysiloxane of a linear structure and a polysiloxane of a cyclic structure; and/or,
the polysaccharide is selected from one or more of a plant polysaccharide and a marine polysaccharide.

25. The battery cell according to claim 19, wherein the second positive electrode active material comprises a second core and a second shell coating the second core, and
the second core comprises Liₘ₁Mn_{1-y1}B²_{y1}P_{1-z1}C²_{z1}O₄, wherein m1 is selected from a range of 0.9 to 1.1, y1 is selected from a range of 0.001 to 0.5, z1 is selected from a range of 0.001 to 0.1, B² comprises one or more elements selected from Ti, V, Zr, Fe, Ni, Mg, Co, Ga, Sn, Sb, Nb, and Ge, and C² comprises one or more elements selected from B, S, Si, and N;
the second shell comprises a first coating layer coating the second core and a second coating layer coating the first coating layer, the first coating layer comprises pyrophosphate MP₂O₇ and phosphate XPO₄, wherein M and X each independently comprise one or more elements selected from Li, Fe, Ni, Mg, Co, Cu, Zn, Ti, Ag, Zr, Nb, and Al; the second coating layer comprises carbon.

26. The battery cell according to claim 19, wherein the second positive electrode active material comprises a second core and a second shell coating the second core, and
the second core comprises Liₘ₁Mn_{1-y1}B²_{y1}P_{1-z1}C²_{z1}O₄, wherein m1 is selected from a range of 0.9 to 1.1, y1 is selected from a range of 0.001 to 0.5, z1 is selected from a range of 0.001 to 0.1, B² comprises one or more elements selected from Ti, V, Zr, Fe, Ni, Mg, Co, Ga, Sn, Sb, Nb, and Ge, and C² comprises one or more elements selected from B, S, Si, and N;
the second shell comprises a first coating layer coating the second core, a second coating layer coating the first coating layer, and a third coating layer coating the second coating layer, and
the first coating layer comprises pyrophosphate LiᵣQP₂O₇ and/or Qₛ(P₂O₇)ₜ, wherein 0 ≤ r ≤ 2, 1 ≤ s ≤ 4, 1 ≤ t ≤ 6, and Q in the pyrophosphate LiᵣQP₂O₇ and/or Qₛ(P₂O₇)ₜ each independently comprises one or more elements selected from Fe, Ni, Mg, Co, Cu, Zn, Ti, Ag, Zr, Nb, and Al;
the second coating layer comprises crystalline phosphate XPO₄, wherein X comprises one or more elements selected from Li, Fe, Ni, Mg, Co, Cu, Zn, Ti, Ag, Zr, Nb, and Al;
the third coating layer comprises carbon.

27. The battery cell according to any one of claims 19-24, wherein the one or more coating layers in the second shell that are most distal to the second core each independently comprise one or more selected from a polysiloxane, a polysaccharide, and a polysaccharide derivative.

28. The battery cell according to any one of claims 23-24 and 27, wherein the polysiloxane comprises a structural unit represented by formula (i), 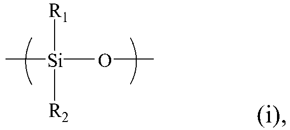
R₁ and R₂ are independently selected from H, -COOH, -OH, -SH, -CN, -SCN, amino, a phosphate group, a carboxylate group, an amide group, an aldehyde group, sulfonyl, a polyether segment, C1-C20 aliphatic hydrocarbyl, C1-C20 haloaliphatic hydrocarbyl, C1-C20 heteroaliphatic hydrocarbyl, C1-C20 haloheteroaliphatic hydrocarbyl, C6-C20 aromatic hydrocarbyl, C6-C20 haloaromatic hydrocarbyl, C2-C20 heteroaromatic hydrocarbyl, and C2-C20 haloheteroaromatic hydrocarbyl;
optionally, R₁ and R₂ are independently selected from H, amino, a phosphate group, a polyether segment, C1-C8 alkyl, C1-C8 haloalkyl, C1-C8 heteroalkyl, C1-C8 haloheteroalkyl, C2-C8 alkenyl, and C2-C8 haloalkenyl.

29. The battery cell according to any one of claims 23-24 and 27-28, wherein the polysiloxane further comprises a capping group, and the capping group comprises one or more of the group consisting of the following functional groups: polyether, C1-C8 alkyl, C1-C8 haloalkyl, C1-C8 heteroalkyl, C1-C8 haloheteroalkyl, C2-C8 alkenyl, C2-C8 haloalkenyl, C6-C20 aromatic hydrocarbyl, C1-C8 alkoxy, C2-C8 epoxy, hydroxy, C1-C8 hydroxyalkyl, amino, C1-C8 aminoalkyl, carboxy, and C1-C8 carboxyalkyl.

30. The battery cell according to any one of claims 23-24 and 27-29, wherein the polysiloxane comprises one or more selected from polydimethylsiloxane, polydiethylsiloxane, polymethylethylsiloxane, polymethylvinylsiloxane, polyphenylmethylsiloxane, polymethylhydrosiloxane, carboxy-functionalized polysiloxane, epoxy-terminated polysiloxane, methoxy-terminated polydimethylsiloxane, hydroxypropyl-terminated polydimethylsiloxane, polymethylchloropropylsiloxane, hydroxy-terminated polydimethylsiloxane, polymethyltrifluoropropylsiloxane, perfluorooctylmethylpolysiloxane, aminoethylaminopropylpolydimethylsiloxane, terminal polyether polydimethylsiloxane, pendant aminopropylpolysiloxane, aminopropyl-terminated polydimethylsiloxane, pendant phosphate-grafted polydimethylsiloxane, pendant polyether-grafted polydimethylsiloxane, 1,3,5,7-octamethylcyclotetrasiloxane, 1,3,5,7-tetrahydro-1,3,5,7-tetramethylcyclotetrasiloxane, cyclopentasiloxane, 2,4,6,8-tetramethylcyclotetrasiloxane, 2,4,6,8-tetramethyl-2,4,6,8-tetravinylcyclotetrasiloxane, cyclopolymethylvinylsiloxane, hexadecamethylcyclooctasiloxane, tetradecamethylcycloheptasiloxane, and cyclopolydimethylsiloxane.

31. The battery cell according to any one of claims 23-24 and 27-30, wherein number-average molecular weights of the polysiloxane, the polysaccharide, and the polysaccharide derivative are each independently 300,000 or less, optionally 10,000 to 200,000, more optionally 20,000 to 120,000, and further optionally 400 to 80,000.

32. The battery cell according to any one of claims 23-24 and 27-31, wherein a mass percentage content of polar functional groups in the polysiloxane is α, wherein 0 ≤ α < 50%, and optionally 5% ≤ α ≤ 30%.

33. The battery cell according to any one of claims 23-24 and 27-32, wherein substituents attached to saccharide units in the polysaccharide and the polysaccharide derivative each independently comprise one or more of the group consisting of the following functional groups: -OH, -COOH and a salt thereof, -R-OH, -SO₃H and a salt thereof, -R-OH, -R-SO₃H and a salt thereof, a sulfate group, and alkoxy, wherein R represents alkylene, and optionally C1-C5 alkylene;
optionally, substituents attached to saccharide units in the polysaccharide and the polysaccharide derivative each independently comprise one or more of the group consisting of the following functional groups: -OH, -COOH, -COOLi, -COONa, -COOK, -SO₃H, -SO₃Li, - SO₃Na, -SO₃K, -CH₂-SO₃H, -CH₂-SO₃Li, -CH₂-SO₃Na, -CH₂-SO₃K, methoxy, and ethoxy.

34. The battery cell according to any one of claims 23-24 and 27-33, wherein the polysaccharide comprises one or more selected from pectin, carboxymethyl starch, hydroxypropyl starch, dextrin, cellulose ether, carboxymethyl chitosan, hydroxyethyl cellulose, carboxymethylcellulose, carboxypropyl methyl cellulose, guar gum, sesbania gum, arabic gum, lithium alginate, sodium alginate, potassium alginate, fucoidan, agar, carrageenan, carrageenin, xanthan gum, and fenugreek gum.

35. The battery cell according to any one of claims 23-24 and 27-34, wherein mass percentage contents of the substituents attached to the saccharide units in the polysaccharide and the polysaccharide derivative are each independently 20% to 85%, and optionally 30% to 78%.

36. The battery cell according to any one of claims 19-35, wherein a lattice mismatch degree between a material of the second core and a material of the second shell is less than 10%.

37. The battery cell according to any one of claims 11-36, wherein based on a total weight of the second positive electrode active material,
a content of the manganese element is within a range of 10 wt% to 35 wt%, optionally within a range of 13.3 wt% to 33.2 wt%, more optionally within a range of 15 wt% to 30 wt%, and further optionally within a range of 17 wt% to 20 wt%; and/or,
a content of the phosphorus element is within a range of 12 wt% to 25 wt%, optionally within a range of 15 wt% to 20 wt%, and more optionally within a range of 16.8 wt% to 19.5 wt%; and/or,
a weight ratio of the manganese element to the phosphorus element is within a range of 0.71 to 1.85, optionally 0.90 to 1.25, and more optionally 0.95 to 1.20.

38. The battery cell according to any one of claims 1-18, wherein a surface of the second positive electrode active material is coated with one or more of carbon and doped carbon; optionally, a surface of the second positive electrode active material is coated with carbon.

39. The battery cell according to claim 38, wherein a doping element in the doped carbon comprises one or more selected from nitrogen, phosphorous, sulfur, boron, and fluorine.

40. The battery cell according to any one of claims 19-20, 23-24, and 27-39, wherein a coating amount of the second shell is 0.1 wt% to 6 wt% based on a weight of the second core.

41. The battery cell according to any one of claims 19 and 21-37, wherein,
a coating amount of the first coating layer is greater than 0 and less than or equal to 7 wt%, optionally greater than 0 and less than or equal to 6 wt%, more optionally greater than 0 and less than or equal to 5.5 wt%, or 4 wt% to 5.6 wt%, and further optionally greater than 0 and less than or equal to 2 wt%, based on a weight of the second core; and/or,
a coating amount of the second coating layer is greater than 0 and less than or equal to 6 wt%, optionally greater than 0 and less than or equal to 5.5 wt%, and more optionally 2 wt% to 4 wt% or 3 wt% to 5 wt%, based on the weight of the second core; and/or,
a coating amount of the third coating layer is greater than 0 and less than or equal to 6 wt%, optionally greater than 0 and less than or equal to 5.5 wt%, and more optionally greater than 0 and less than or equal to 2 wt%, based on the weight of the second core.

42. The battery cell according to any one of claims 19, 22-24, 26-37, and 41, wherein the second shell further comprises a fourth coating layer coating the third coating layer and a fifth coating layer coating the fourth coating layer;
coating amounts of the fourth coating layer and the fifth coating layer are each independently 0.01 wt% to 10 wt%, optionally 0.05 wt% to 10 wt%, more optionally 0.1 wt% to 5 wt%, and further 0.1 wt% to 2 wt%, based on the weight of the second core.

43. The battery cell according to any one of claims 19-42, wherein the second shell is located at 40% to 90%, optionally 60% to 80%, of a surface of the second core.

44. The battery cell according to any one of claims 19-20, 23-24, 27-40, and 43, wherein a thickness of the second shell is 1 nm to 15 nm.

45. The battery cell according to any one of claims 19, 21-37, and 41-43, wherein,
a thickness of the first coating layer is 1 nm to 10 nm, and optionally 2 nm to 10 nm; and/or,
a thickness of the second coating layer is 2 nm to 25 nm, optionally 2 nm to 15 nm, and more optionally 3 nm to 15 nm; and/or,
a thickness of the third coating layer is 2 nm to 25 nm, and optionally 5 nm to 25 nm.

46. The battery cell according to any one of claims 19-45, wherein,
the one or more coating layers each independently comprise one or more selected from a pyrophosphate, a phosphate, and an oxide, and the one or more selected from the pyrophosphate, the phosphate, and the oxide are in a crystalline state;
optionally, crystallinities of the pyrophosphate, phosphate, and oxide are each independently 10% to 100%, and more optionally 50% to 100%.

47. The battery cell according to any one of claims 19-46, wherein a weight ratio of the pyrophosphate to the phosphate and a weight ratio of the pyrophosphate to the oxide in the second shell are each independently 1:3 to 3:1, and optionally 1:3 to 1:1.

48. The battery cell according to any one of claims 19-47, wherein the one or more coating layers each independently comprise carbon, and the carbon is a mixture of SP2-configuration carbon and SP3-configuration carbon;
optionally, a molar ratio of the SP2-configuration carbon to the SP3-configuration carbon in the carbon is any value within a range of 0.07 to 13, more optionally any value within a range of 0.1 to 10, and further optionally any value within a range of 2.0 to 3.0.

49. The battery cell according to any one of claims 19-48, wherein,
the one or more coating layers each independently comprise doped carbon, and a mass content of the doping element in the doped carbon is 30% or less; optionally, a mass content of the doping element in the doped carbon is 20% or less.

50. The battery cell according to any one of claims 19-49, wherein,
the one or more coating layers each independently comprise doped carbon, wherein,
the doping element in the doped carbon is nitrogen and/or sulfur, and a mass content of the doping element in the doped carbon is 1% to 15%; or,
the doping element is phosphorus, boron, and/or fluorine, and a mass content of the doping element in the doped carbon is 0.5% to 5%;
optionally, the doping element is nitrogen, phosphorus, sulfur, boron, or fluorine.

51. The battery cell according to any one of claims 19-50, wherein,
the one or more coating layers each independently comprise a pyrophosphate, an interplanar spacing of the pyrophosphate is within a range of 0.293 nm to 0.470 nm, optionally 0.297 nm to 0.462 nm or 0.293 nm to 0.326 nm, and more optionally 0.300 nm to 0.310 nm, and an included angle in the crystal orientation (111) is within a range of 18.00° to 32.57°, optionally 18.00° to 32.00° or 26.41° to 32.57°, more optionally 19.211° to 30.846°, and further optionally 29.00° to 30.00°; and/or,
the one or more coating layers each independently comprise a phosphate, an interplanar spacing of the phosphate is within a range of 0.244 nm to 0.425 nm, and optionally 0.345 nm to 0.358 nm, and an included angle in the crystal orientation (111) is within a range of 20.00° to 37.00°, and optionally 24.25° to 26.45°;
optionally, the first coating layer or the second coating layer comprises a phosphate.

52. The battery cell according to any one of claims 11-51, wherein,
a lattice change rate of the second positive electrode active material before and after complete lithium deintercalation is 50% or less, optionally 9.8% or less, more optionally 8.1% or less, further optionally 7.5% or less, further more optionally 6% or less, still further more optionally 4% or less, yet still further more optionally 3.8% or less, and yet another still further more optionally 2.0% to 3.8%; and/or,
a Li/Mn anti-site defect concentration of the second positive electrode active material is 5.3% or less, optionally 5.1% or less, more optionally 4% or less, further optionally 2.2% or less, further more optionally 2% or less, and still further more optionally 1.5%-2.2% or 0.5% or less; and/or,
a surface oxygen valence state of the second positive electrode active material is -1.55 or less, optionally -1.82 or less, more optionally -1.88 or less, further optionally -1.90 or less, further more optionally -1.98 to -1.88, still further more optionally -1.98 to -1.89, and yet still further more optionally -1.98 to -1.90.

53. The battery cell according to any one of claims 1-52, wherein the battery cell further comprises a negative electrode plate and a separator.

54. A method for preparing the battery cell according to any one of claims 1-53, comprising the following steps:
providing a battery container containing a positive electrode plate and a negative electrode plate, wherein the positive electrode plate comprises a positive electrode current collector and a positive electrode film layer disposed on at least one surface of the positive electrode current collector, the positive electrode film layer comprises a positive electrode active material, the positive electrode active material comprises a first positive electrode active material and a second positive electrode active material, the first positive electrode active material and the second positive electrode active material enable deintercalation and intercalation of lithium ions, crystal forms of the first positive electrode active material and the second positive electrode active material are different, the second positive electrode active material is provided with a one-dimensional ion transport channel, and an ionic conductivity of the first positive electrode active material is greater than that of the second positive electrode active material;
uniformly mixing a non-aqueous solvent and an electrolyte salt to obtain an electrolytic solution, wherein the electrolyte salt comprises a lithium salt and a metal Me salt, the lithium salt dissociates into lithium ions and first anions in the electrolytic solution, the metal Me salt dissociates into Me cations and second anions in the electrolytic solution, an ionic radius of the Me cations is larger than that of the lithium ions, a weight content of the lithium ions in the electrolytic solution is denoted as w₁, and a weight content of the Me cations in the electrolytic solution is denoted as w₂, both based on the total weight of the electrolytic solution; and
injecting the obtained electrolytic solution into the battery container to obtain a battery cell, wherein,
in a charge-discharge test of the battery cell, a total discharge capacity of the battery cell is denoted as Q₁, and a discharge capacity of the battery cell at a discharge voltage of 3.6 V or less is denoted as Q₂, both with a unit of mAh;
the battery cell, when in a state where the remaining capacity is greater than 90%, satisfies a condition of 0.8 ≤ (Q₂/Q₁)/[w₂/(w₁ + w₂)] ≤ 8.5;
the charge-discharge test of the battery cell is performed under the following conditions: at a test temperature of 25 °C, the battery cell is fully charged at 0.5 C, left to stand for 5 min, and then fully discharged at 0.33 C.

55. A battery, comprising the battery cell according to any one of claims 1-53 or a battery cell prepared by the method according to claim 54.

56. An electric device, comprising the battery according to claim 55.
